# EUROPÄISCHE PATENTSCHRIFT

(11) **EP 3 688 081 B1**
(45) Veröffentlichungstag und Bekanntmachung des Hinweises auf die Patenterteilung: **23.09.2026**
(21) Anmeldenummer: 18782901.5
(22) Anmeldetag: 25.09.2018
(51) Int. Cl.: C08J 11/24, C08K 5/053, C08K 5/00

(54) **VERFAHREN ZUR STABILISIERUNG VON HALOGENFREIEN THERMOPLASTISCHEN KUNSTSTOFF-REZYKLATEN SOWIE STABILISIERTE KUNSTSTOFFZUSAMMENSETZUNGEN UND HIERAUS HERGESTELLTE FORMMASSEN UND FORMTEILE**
METHOD FOR STABILIZING HALOGEN-FREE THERMOPLASTIC RECYCLATES, STABILIZED PLASTIC COMPOSITIONS, AND MOLDING COMPOUNDS AND MOLDED PARTS PRODUCED THEREFROM
PROCÉDÉ POUR STABILISER DES PRODUITS RECYCLÉS À BASE DE MATIÈRES PLASTIQUES THERMOPLASTIQUES SANS HALOGÈNES ET COMPOSITIONS DE MATIÈRES PLASTIQUES STABILISÉES AINSI QUE MASSES À MOULER ET PIÈCES MOULÉES FABRIQUÉES A PARTIR DE CELLES-CI

(30) Priorität: 28.09.2017 DE 102017217312
(43) Veröffentlichungstag der Anmeldung: 05.08.2020
(73) Patentinhaber: Fraunhofer-Gesellschaft zur Förderung der angewandten Forschung e.V., 80686 München (DE)
(72) Erfinder: PFAENDNER, Rudolf, 64668 Rimbach (DE); METZSCH-ZILLIGEN, Elke, 54597 Steffeln (DE)
(74) Vertreter: Pfenning, Meinig & Partner mbB
(86) Internationale Anmeldenummer: PCT/EP2018/075971
(87) Internationale Veröffentlichungsnummer: WO 2019/063550

(56) Entgegenhaltungen:
- WO-A1-2013/012705
- WO-A1-94/07946
- JP-A- 2002 060 638
- US-A1- 2013 041 086

## Beschreibung

Die vorliegende Erfindung betrifft ein Verfahren zur Stabilisierung von halogenfreien thermoplastischen Kunststoff-Rezyklaten bzw. vorgeschädigten Kunststoffen gegen oxidativen, thermischen und/oder aktinischen Abbau. Beim erfindungsgemäßen Verfahren wird als Komponente mindestens ein Alditol oder Cyclitol in ein halogenfreies thermoplastischen Kunststoff-Rezyklat sowie ggf. zusätzlich hierzu mindestens ein primäres Antioxidans und/oder mindestens ein sekundäres Antioxidans in ein halogenfreies thermoplastisches Kunststoff-Rezyklat eingebracht. Durch das erfindungsgemäße Verfahren können Kunststoff-Rezyklate mit hoher Wirksamkeit und auf sehr umweltfreundliche und kostengünstige Weise gegen oxidativen, thermischen und/oder aktinischen Abbau stabilisiert werden. Zudem betrifft die vorliegende Erfindung auch entsprechende Rezyklat-basierte Kunststoffzusammensetzungen sowie hieraus hergestellte Formmassen und Formteile. Ferner betrifft die vorliegende Erfindung die Verwendung einer Stabilisator-Zusammensetzungen zur Stabilisierung von halogenfreien thermoplastischen Kunststoff-Rezyklaten gegen oxidativen, thermischen und/oder aktinischen Abbau.

Kunststoff-Rezyklate sind ein wachsender Markt und ein wichtiges Element in der Kreislaufwirtschaft von Rohstoffen, wobei idealerweise Rezyklate dann Neukunststoffe mit einem identischen oder zumindest vergleichbaren Eigenschaftsprofil ersetzen sollen. Allerdings kommt es bei Rezyklaten aus der Produktion oder von Altkunststoffen während der ersten Verarbeitungsschritte (z.B. Compoundierung, Spritzguss) und der Anwendung zu irreversiblen Veränderungen in der Polymerkette durch mechano-chemische, chemische oder lichtinduzierte Prozesse (siehe z.B. R. Pfaendner et al., Angew. Makromol. Chemie 1995, 232, 193-2 27; J. Pospisil et al., Pol. Degr. Stab. 1995). Durch Radikalreaktionen in der Anwesenheit von Sauerstoff werden neue chemische Gruppen in der Polymerkette erzeugt und/oder die Zusammensetzung des Polymeren geändert. Die Konzentration dieser neu formierten Gruppen nimmt mit der Einsatzzeit und dem Einsatzbereich (UV-Licht, hohe Temperaturen, Kontaktmedien) zu. Die strukturellen Inhomogenitäten eines Rezyklates beeinflussen die Kunststoff-Eigenschaften, wie z.B. die mechanischen Eigenschaften.

Weiterhin gilt, dass Rezyklate oder vorgeschädigte Kunststoffe oxidationsempfindlicher sind als Neumaterial, da Abbauprodukte als Initiatorstellen für eine weitere Oxidation oder als Prodegradantien wirken (A. S. Maxwell, Pol. Eng. Sci. 2008, 381-385; I. H. Craig, J. R. White, J. Mater. Sci . 2006, 41, 993-1006). Um eine Qualitätsverbesserung von Kunststoff-Rezyklaten zu erreichen, ist die Nachstabilisierung mit ausgewählten Stabilisatoren eine wesentliche Methode. Die eingesetzten Stabilisatoren schützen das Rezyklat vor weiterer oxidativen (oder photooxidativen) Schädigung. Die optimierte Stabilisator-Zusammensetzung für ein Rezyklat unterscheidet sich jedoch aufgrund der beschriebenen strukturellen Abweichungen von der Stabilisierungszusammensetzung der Neuware (siehe z.B. R. Pfaendner, Kunststoffe International 12/2015, 41-44).

Aufgrund der heute anerkannten Unterschiede zwischen Kunststoff-Neuware und Kunststoff-Rezyklaten sind spezielle Rezyklat-Stabilisator-Zusammensetzungen bekannt und auch als kommerzielle Produkte erhältlich (z.B. Recyclostab Serie der Fa. PolyAd Services GmbH, Bensheim). Bekannte technische Stabilisierungslösungen, die den Anforderungen von Rezyklaten Rechnung tragen sind beispielsweise:
- Stabilisierungs-Zusammensetzung bestehend aus einem phenolischen Antioxidans, einem Phosphit und einem Fettsäuresalz (EP 0662101).
- Stabilisierungs-Zusammensetzung bestehend aus einem phenolischen Antioxidans, einem Phosphit und einem Metalloxid wie Calciumoxid (US 6525158, US 6251972).
- Stabilisierungs-Zusammensetzung bestehend aus einem phenolischen Antioxidans und einem polyfunktionellen Epoxid (EP 0702704).
- Stabilisierung durch ein makrozyklisches Piperidin (US 5789470).
- Stabilisierungs-Zusammensetzung bestehend aus einem sekundären aromatischen Amin und einem polyfunktionellen Epoxid (WO 97/30112).
- Entfärbung von geschädigten Pololefinen durch ein Hydroxylamin (EP 470048)
- Mischung aus Antioxidantien, Gleitmittel, Antiblockmittel, UV-Stabilisatoren und Antistatika für Rezyklatfolien (DD 288161)
- Stabilisierungs-Zusammensetzung für gemischte Kunststoffe bestehend aus einem phenolischen Antioxidans und einem Phosphit/Phosphonit (EP 0506614)

Trotz der bekannten Lösungen besteht nach wie vor Bedarf für besonders leistungsfähige bzw. wirkungsvolle, umweltfreundliche und kostengünstige Möglichkeiten zur Stabilisierung von Kunststoffen-Rezyklaten bzw. dafür verwendbare Stabilisator-Zusammensetzungen.

Rezyklate haben hierbei bereits einen Lebenszyklus durchlaufen und waren bereits zu Kunststoffformteilen kompoundiert und als solche beispielsweise mechanischen, chemischen, aktinischen und/oder oxidativen Belastungen ausgesetzt. Hierdurch resultieren bestimmte Fehlstellen in der Polymerkette, die bei einer erneuten Verarbeitung der Rezyklate eine weitere, überproportionale Schädigung des zugrundeliegenden Kunststoffmaterials bewirken. Die vorhandenen Schädigungsstellen im Polymer dienen hierbei als Initiatorstellen für einen beschleunigten und erweiterten Abbau des Polymers. Insbesondere sind eine Erniedrigung des Molekulargewichts, eine Verbreiterung der Molekulargewichtsverteilung, eine Herabsetzung der mechanischen Eigenschaften und eine Erhöhung der Lichtempfindlichkeit typische Erscheinungsbilder, die bei rezyklierten Kunststoffen, insbesondere bei deren erneuter Verarbeitung z1utage treten. Das insgesamt verschlechterte Eigenschaftsprofil ist somit einer erneuten Verarbeitung eher abträglich.

Aus der WO 2013/012705 A1 sind biologisch abbaubare Zusammensetzungen, die einen aliphatisch-aromatischen Copolyester enthalten, der aus aromatischen Polyestern abgeleitet ist sowie ein Verfahren zur Herstellung der Zusammensetzungen und aus den Zusammensetzungen hergestellte Artikel, bekannt.

US 2013/041086 A1 betrifft eine thermoplastische Polymerzusammensetzung, die eine bestimmte Phenolverbindung oder organische Phosphorverbindung, eine Verbindung der angegebenen Formel (9) und ein thermoplastisches Polymer enthält, sowie einen Verarbeitungsstabilisator, der eine bestimmte Phenolverbindung oder organische Phosphorverbindung und eine Verbindung der Formel (9).

WO 94/07946 A1 beschreibt recycelte Kunststoffe, vorwiegend Thermoplaste, aus Haushalts-, Gewerbe- und Industrieabfällen können durch Zugabe einer Kombination aus einem sterisch gehinderten Phenol mit einem organischen Phosphit oder Phosphonit und einem Metallsalz einer Fettsäure gegen thermooxidativen Abbau stabilisiert werden.

Aus der JP 2002 060638 A offenbart eine Stabilisatorzusammensetzung für organisches Polymermaterial, die eine Spirochromanverbindung (a), einen mehrwertigen Alkohol (b), ein Antioxidans auf Phosphorbasis (c) und ein phenolisches Antioxidans (d) umfasst und 0,5 bis 10 Gew.-% der Komponente (a) + (b) und 99,5 bis 90 Gew.-% der Komponente (c) + (d) bezogen auf die Gesamtmenge der Komponenten (a), (b), (c) und (d) enthält.

Ausgehend hiervon war es somit die Aufgabe der vorliegenden Erfindung, ein Verfahren zur Stabilisierung von halogenfreien thermoplastischen Kunststoff-Rezyklaten anzugeben, mit welchem die Kunststoff-Rezyklate auf sehr wirkungsvolle, umweltfreundliche und kostengünstige Weise gegen oxidativen, thermischen und/oder aktinischen Abbau stabilisiert werden können.

Diese Aufgabe wird hinsichtlich eines Verfahrens zur Stabilisierung von halogenfreien thermoplastischen Kunststoff-Rezyklaten mit den Merkmalen des Patentanspruchs 1, hinsichtlich einer Kunststoffzusammensetzung mit den Merkmalen des Patentanspruchs 9, hinsichtlich eines Formteils, welches aus der Kunststoffzusammensetzung herstellbar ist, mit den Merkmalen des Patentanspruchs 12sowie hinsichtlich der Verwendung der Stabilisator-Zusammensetzungen mit den Merkmalen des Patentanspruchs 13 gelöst. Dabei stellen die jeweilig abhängigen Patentansprüche vorteilhafte Weiterbildungen dar.

Erfindungsgemäß wird somit ein Verfahren zur Stabilisierung von halogenfreien thermoplastischen Kunststoff-Rezyklaten gegen oxidativen, thermischen und/oder aktinischen Abbau angegeben, bei welchem als Komponente mindestens ein Alditol oder Cylitol (nachfolgend auch als "Komponenten (A)" bezeichnet) in ein halogenfreies thermoplastischen Kunststoff-Rezyklat eingebracht wird. Das halogenfreie thermoplastische Kunststoff-Rezyklat ist dabei ausgewählt aus der Gruppe bestehend aus rezyklierten Polymeren aus Olefinen oder Diolefinen.

Da die den Kunststoff-Recyclaten zugrundeliegenden thermoplastischen Kunststoffe bei deren Herstellung im Regelfall schon primäre und/oder sekundäre Antioxidantien zugesetzt wurden, ist es bei Wiederverarbeitung von gebrauchten oder bereits verwendeten Kunststoffen, also Recyclaten nicht unbedingt notwendig, bei Aufarbeitung dieser Recyclate erneut primäre und/oder sekundäre Antioxidantien. Überraschenderweise wurde gefunden, dass es ausreicht, mindestens ein Alditol oder Cylitol in die Kunststoffrecyclate einzuarbeiten, um eine stabilisierende Wirkung zu erzielen, die bei Vorhandensein von primären und/oder sekundären Oxidantien auf synergistische Weise besonders hoch ausfällt.

Gemäß der vorliegenden Erfindung wird unter einem Kunststoff-Rezyklat ein Kunststoff-Rezyklat nach der begrifflichen Definition gemäß Norm DIN EN 15347:2007 verstanden. Im Weiteren bestehen für viele Arten von Kunststoff-Rezyklaten einschlägige internationale Normen. Für PET-Kunststoff-Rezyklate ist beispielsweise die DIN EN 15353:2007 einschlägig. PS-Rezyklate werden in DIN EN 15342:2008 näher beschrieben. PE-Rezyklate werden in DIN EN 15344:2008 behandelt. PP-Rezyklate werden in DIN EN 15345:2008 charakterisiert. Zum Zwecke der entsprechenden speziellen Kunststoff-Rezyklate macht sich die vorliegende Patentanmeldung die Definitionen dieser internationalen Normen zu Eigen.

Kunststoff-Rezyklate weisen im Gegensatz zu Neukunststoffen zumeist eine Vorschädigung auf, d.h. durch oxidative oder (photo)oxidative Prozesse werden neue chemische Gruppen auf der Polymerkette erzeugt. Bei Polyolefinen z.B. sind dies vorwiegend Carbonylgruppen, die bei Neuware nicht oder nur in sehr untergeordnetem Maß vorhanden sind. Die Konzentration der Carbonylgruppen ist daher gleichzeitig ein Maß für die Vorschädigung des Polymeren. Die Konzentration an Carbonylgruppen kann nach bekannten analytischen Verfahren wie z.B. Infrarot-Spektroskopie bestimmt werden, wie sie beispielsweise in E. Richaud et al. Pol. Degr. Stab. 2009, 94, 410-420 beschrieben ist. Hierbei erfolgt eine Messung der Absorption der Carbonylschwingung im Bereich von 1720 cm⁻¹.

Unter "halogenfrei" ist erfindungsgemäß zu verstehen, dass der der thermoplastische Kunststoff weniger als 1 % an halogenhaltigen Polymeren, wie z.B. PVC oder PVDC, enthält. Vorzugsweise enthält der halogenfreie thermoplastische Kunststoff weniger als 0,5 %, besonders bevorzugt weniger als 0,1 %, an halogenhaltigen Polymeren. Ganz besonders bevorzugt enthält der halogenfreie thermoplastische Kunststoff überhaupt keine halogenhaltigen Polymere.

Eine bevorzugte Ausführungsform des Verfahrens sieht vor, dass zusätzlich zum mindestens einen Alditol und/oder mindestens einen Cyclitol mindestens ein primäres Antioxidans und/oder mindestens ein sekundäres Antioxidans in ein halogenfreies thermoplastisches Kunststoff-Rezyklat eingebracht wird.

Im erfindungsgemäßen Verfahren werden das Alditol bzw. Cyclitol (Komponente (A)) sowie ggf. das mindestens eine primäre Antioxidans und/oder das mindestens eine sekundäre Antioxidans (Komponente (B)) in ein halogenfreies thermoplastisches Kunststoff-Rezyklat eingebracht. Die Komponenten (A) und (B) können dabei einzeln bzw. getrennt voneinander in das Kunststoff-Rezyklat eingebracht werden oder die Komponenten (A) und (B) können zusammen in Form einer die Komponenten (A) und (B) enthaltenden Zusammensetzung bzw. in Form einer aus den Komponenten (A) und (B) bestehenden Zusammensetzung in das Kunststoff-Rezyklat eingebracht werden.

Als Komponente (B) wird
- mindestens ein primäres Antioxidans, oder
- mindestens ein sekundäres Antioxidans, oder
- mindestens eine primäres Antioxidans und mindestens ein sekundäres Antioxidans verwendet.

Für den Fall, dass mindestens ein primäres Antioxidans und mindestens ein sekundäres Antioxidans verwendet werden, können auch diese einzeln bzw. getrennt voneinander oder zusammen in Form einer Mischung in das Kunststoff-Rezyklat eingebracht werden.

Die erfindungsgemäß eingesetzte Komponente (A) sowie ggf. die zusätzlich zur Komponente (A) eingesetzte Komponente (B) wirkt bzw. wirken zusammen als Stabilisator für das halogenfreie thermoplastische Kunststoff-Rezyklat, wobei der oxidative, thermische und/oder aktinische Abbau des halogenfreien thermoplastischen Kunststoff-Rezyklats gehemmt bzw. verhindert wird. Mit anderen Worten wird durch das Einbringen der Komponente (A) sowie ggf. zusätzlich der Komponente (B) in das halogenfreie thermoplastische Kunststoff-Rezyklat der Kunststoff gegen oxidativen, thermischen und/oder aktinischen Abbau stabilisiert.

Die vorliegende Erfindung zeichnet sich dabei besonders dadurch aus, dass Alditole (Zuckeralkohole) und/oder Cyclitole alleine oder zusammen mit primären und/oder sekundären Antioxidantien zur Stabilisierung von halogenfreien thermoplastischen Kunststoff-Rezyklaten eingesetzt werden.

Zuckeralkohole bzw. Polyole wurden bisher nicht zur Stabilisierung von halogenfreien thermoplastischen Kunststoff- Rezyklaten eingesetzt. Zuckeralkohole und Polyole sind gemäß dem Stand der Technik lediglich Komponenten in Formulierungen für die Wärmestabilisierung von Polyvinylchlorid (PVC) und anderen halogenhaltigen Polymeren wie Polyvinylidenchlorid (PVDC) in Zusammensetzungen, die als Wärmestabilisatoren Metallseifen enthalten. Diese stabilisierende Wirkung von Polyolen in halogenhaltigen Polymeren wird dadurch erklärt, dass eine Chelatbildung und Deaktivierung von den PVC-Abbau fördernden Zink-Verbindungen erfolgt (siehe H.O. Wirth, H. Andreas, Pure Appl. Chem. 1977, 49, 627-648; T. lida, K. Goto, J. Appl. Pol. Sci. 1980, 25, 887-900) oder damit eine Reaktion als HCl-Fänger in Zn-freiem PVC erreicht wird (siehe J. Steenwijk et al. Pol. Degr. Stab. 2006, 2233-2240).

Aus den bekannten Mechanismen der Wirkung von Polyolen bei der Wärmestabilisierung von halogenhaltigen Polymeren wie PVC kann jedoch keine Folgerung für die Wirkung als Stabilisator in nicht-halogenhaltigen Kunststoffen oder gar Rezyklaten getroffen werden. Vielmehr sind diese bekannten Mechanismen nur auf halogenhaltige Polymere anwendbar und können nicht auf halogenfreie Polymere übertragen werden. Insofern war es nicht vorhersehbar sondern ist es vielmehr sehr überraschend, dass mit der vorliegenden Erfindung herausgefunden werden konnte, dass Alditole (Zuckeralkohole) und/oder Cyclitole auch halogenfreie Polymer-Rezyklate, alleine stabilisieren können, oder wenn sie zusammen mit primären und/oder sekundären Antioxidantien eingesetzt werden.

Erfindungsgemäß wurde dabei überraschend festgestellt, dass durch das Einbringen von mindestens einem Alditol und/oder mindestens einem Cyclitol allein sowie zusammen mit mindestens einem primären und/oder mindestens einem sekundären Antioxidans eine sehr wirkungsvolle Stabilisierung von halogenfreien thermoplastischen Kunststoff-Rezyklaten gegen oxidativen, thermischen und/oder aktinischen Abbau erreicht werden kann. Zudem handelt es sich bei Alditolen bzw. bei Cyclitolen um sehr umweltfreundliche und kostengünstige Verbindungen. Somit können mit dem erfindungsgemäßen Verfahren halogenfreie thermoplastische Kunststoff-Rezyklate auf sehr wirkungsvolle, umweltfreundliche und kostengünstige Weise gegen oxidativen, thermischen und/oder aktinischen Abbau stabilisiert werden.

Die Erfinder vermuten dabei, dass die in das Kunststoff-Rezyklat eingearbeiteten Alditole und/oder Cyclitole hierbei mit den bereits vorhandenen Schädigungsstellen (in der Regel Carbonylgruppen) zu Halb- oder Vollacetalen bei Verarbeitung der Neukompoundierung reagieren können. Somit werden die Schädigungsstellen im Kunststoff effektiv maskiert und stehen als Initiatorstellen für einen weiteren Abbau nicht mehr zur Verfügung. Mit der erfindungsgemäßen Methode bzw. mit den erfindungsgemäßen Additivzusammensetzungen lassen sich somit Schädigungsstellen in Kunststoffrezyklaten beheben.

Aus diesem Grund ist auch der Zusatz eines Alditols oder Cyclitols zu einem Kunststoff-Rezyklat allein ein wirksamer Stabilisator, da häufig davon auszugehen ist, dass im Rezyklat aus der ersten Anwendung vorhandene primäre und sekundäre Antioxidantien nicht vollständig während des Einsatzes verbraucht wurden.

Das im erfindungsgemäßen Verfahren eingesetzte halogenfreie thermoplastische Kunststoff-Rezyklat ist vorzugsweise ein Polyolefin-Rezyklat, z.B. ein Polypropylen-Rezyklat oder ein Polyethylen-Rezyklat.

Die erfindungsgemäße Zusammensetzung ist weiterhin besonders geeignet vorgeschädigte Rezyklate zu stabilisieren, insbes. Pololefin-Rezyklate deren Carbonylgruppengehalt, bestimmt durch Absorption im Infrarotspektrum, mindestens 0.01 mol/kg beträgt, bevorzugt größer als 0.02 mol/kg und besonders bevorzugt größer als 0.05 mol/kg ist.

In einer bevorzugten Variante des erfindungsgemäßen Verfahrens ist das mindestens eine primäre Antioxidans ausgewählt aus der Gruppe bestehend aus phenolischen Antioxidantien, Aminen, Lactonen und Mischungen hiervon.

Als phenolische Antioxidantien können beispielsweise verwendet werden:
Alkylierte Monophenole, wie z.B. 2,6-Di-*tert*-butyl-4-methylphenol, 2*-tert-*Butyl-4,6-dimethylphenol, 2,6-Di-*tert*-butyl-4-ethylphenol, 2,6-Di-tert-butyl-4-n-butylphenol, 2,6-Di-*tert*-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-*tert*-butyl-4-methoxymethyl-phenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-*tert*-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-tert-butyl-4-hydroxyanisol, 3,5-Di-*tert*-butyl-4-hydroxyanisol, 3,5-Di-tert-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-sec-amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert*-butylphenol), 2,2'-Ethylidenbis(4,6-di-*tert*-butylphenol), 2,2'-Ethylidenbis(6-*tert-*butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis-(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-tert-butyl-5-methyl-2-hydroxybenzyl)-4-methylphenol, 1,1,3-Tris(5-*tert*-butyl-4-hydroxy-2-methylphenyl)butan, 1,1-bis(5-*tert*-butyl-4-hydroxy-2-methylphenyl)-3-n-dodecylmercaptobutan, Ethylenglycol-bis[3,3-bis(3'-*tert*-butyl-4'-hydroxyphenyl)butyrat], Bis(3-*tert*-butyl-4-hydroxy-5-methylphenyl)dicyclopentadien, Bis[2-(3'-*tert*-butyl-2'-hydroxy-5'-methylbenzyl)-6-*tert*-butyl-4-methylphenyl]-terephthalat, 1,1-Bis-(3,5-dimethyl-2-hydroxyphenyl)butan, 2,2-Bis(3,5-di-*tert-*butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert*-butyl-4-hydroxy-2-methylphenyl)pentan;
O-, N- und S-Benzyl-Verbindungen, wie z.B. 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-*tert*-butylbenzylmercaptoacetat, Tris(3,5-di-*tert*-butyl-4-hydroxybenzyl)amin, , Bis(4-*tert*-butyl-3-hydroxy-2,6-dimethylbenzyl)dithioterephthalat, Bis(3,5-di-*tert*-butyl-4-hydroxybenzyl)sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert-*butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert*-butyl-4-hydroxphenylethyl)-1,3,5-triazin, 1,3,5-Tris(3,5-di-*tert*-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzyl-phosphonat, Dietyhl-3,5-di-*tert*-butyl-4-hydroxybenzylphosphonat, Di-octadecyl-3,5-di-*tert*-butyl-4-hydroxybenzylphosphonat, Dioctadecyl-5-*tert-*butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert*-butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-tert-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris-(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der (3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard^{®}XL-1, vertrieben durch Addivant);
Ascorbinsäure (Vitamin C).

Besonders bevorzugte phenolische Antioxidantien sind die folgenden Strukturen:

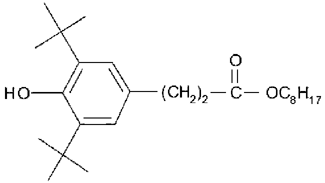

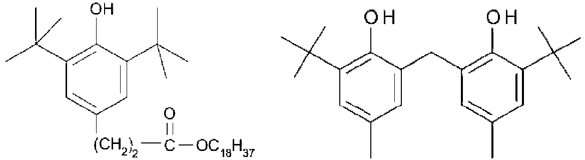

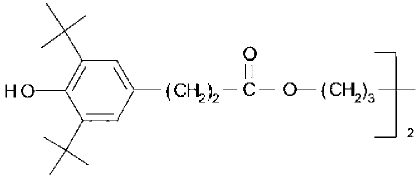

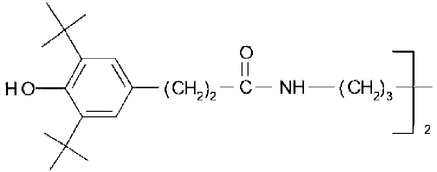

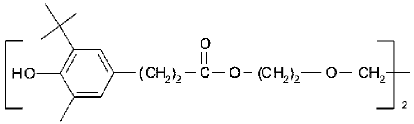

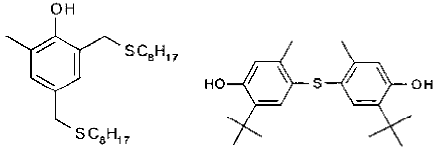

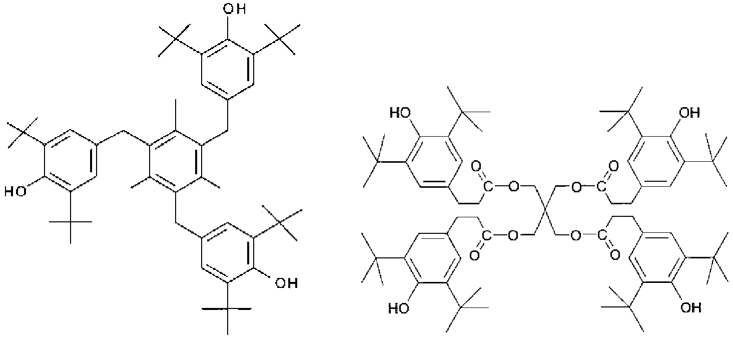

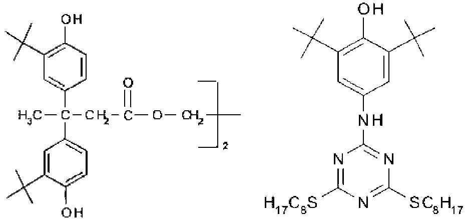

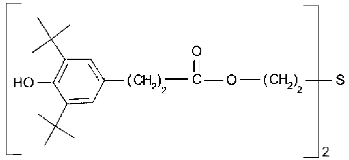

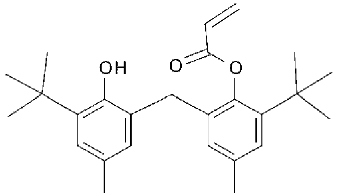

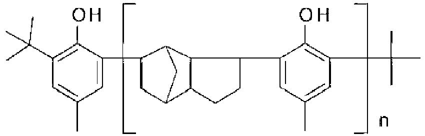

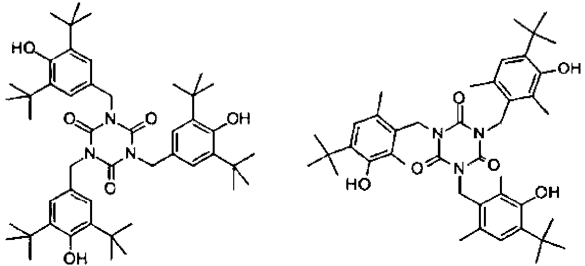

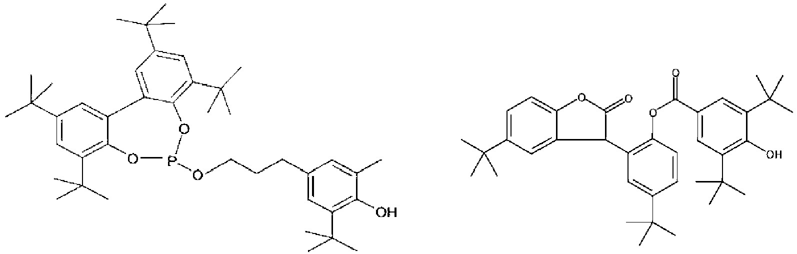

Weitere bevorzugte phenolische Antioxidantien sind auf nachwachsenden Rohstoffen basierende phenolische Antioxidantien wie z. B. Tocopherole (Vitamin E), Tocotrienole, Tocomonoenole, Carotenoide, Hydroxytyrosol, Flavonole wie z.B. Chrysin, Quercitin, Hesperidin, Neohesperidin, Naringin, Morin, Kaempferol, Fisetin, Anthocyane, wie z.B. Delphinidin und Malvidin, Curcumin, Carnosolsäure, Carnosol, Rosmarinsäure, Tannin und Resveratrol.

Ganz besonders bevorzugt werden das phenolische Antioxidans Pentaerythritol-tetrakis[3-(3,5-di-tert-butyl-4-hydroxyphenyl)propionat oder Octadecyl 3-(3,5-di-tert-butyl-4-hydroxyphenyl)propionat als primäres Antioxidans verwendet.

Als aminische Antioxidantien können beispielsweise verwendet werden:
N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetramethyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)-phenyl]amin, *tert*-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten tert-Butyldiphenylaminen, 2,3-Dihydro-3,3-dimethyl-4H-1,4-benzothiazin, Phenothiazin, ein Gemisch aus mono- und dialkylierten tert-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Bevorzugte aminische Antioxidantien sind:
N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin.

Weitere bevorzugte aminische Antioxidantien sind:
Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearyl-hydroxylamin, N-Benzyl-α-phenylnitron, N-Octadecyl-α-hexadecylnitron, sowie Genox EP (vertrieben durch Addivant) gemäß der Formel:
Bevorzugte Lactone sind:
Benzofuranone und Indolinone wie z.B. 3-(4-(2-acetoxyethoxy)phenyl]-5,7-di-tert-butyl-benzofuran-2-on, 5,7-di-tert-butyl-3-[4-(2-stearoyloxyethoxy)-phenyl]benzofuran-2-on, 3,3'-bis[5,7-di-tert-butyl-3-(4-(2-hydroxyethoxy]-phenyl)benzofuran-2-on), 5,7-di-tert-butyl-3-(4-ethoxyphenyl)benzofuran-2-on, 3-(4-acetoxy-3,5-dimethylphenyl)-5,7-di-tert-butyl-benzofuran-2-on, 3-(3,5-dimethyl-4-pivaloyloxyphenyl )-5,7-di-tert-butyl-benzofuran-2-on, 3-(3,4-dimethylphenyl)-5,7-di-tert-butyl-benzofuran-2-on, 3-(2,3-di methylphenyl)-5,7-di-tert-butyl-benzofuran-2-on.

Eine weitere bevorzugte Variante des erfindungsgemäßen Verfahrens zeichnet sich dadurch aus, dass das mindestens eine sekundäre Antioxidans ausgewählt ist aus der Gruppe bestehend aus Phosphorverbindungen, insbesondre Phosphiten und Phosphoniten, Organo-Schwefelverbindungen, insbesondere Sulfiden und Disulfiden, sowie Mischungen hiervon.

Als Phosphite bzw. Phosphonite können beispielsweise verwendet werden:
Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert*-butylphenyl)phosphit, Diisodecylpentaerythritoldiphosphit, Bis(2,4-di-*tert*-butylphenyl)pentaerythritoldiphosphit, Bis(2,4-di-cumylphenyl)pentaerythritoldiphosphit, Bis(2,6-di-*tert*-butyl-4-methylphenyl)pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert*-butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert*-butyl-12H-dibenz[d,g]-1,3,2-dioxaphosphocin, Bis(2,4-di-*tert*-butyl-6-methylphenyl)methylphosphit, Bis(2,4-di-*tert*-butyl-6-methylphenyl)ethylphosphit, 6-Fluoro-2,4,8,10-tetra-*tert*-butyl-12-methyl-dibenz-[d,g]-1,3,2-dioxaphosphocin, 2,2'2"-Nitrilo[triethyltris(3,3",5,5'-tetra-*tert-*butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butyl-phenoxy)-1,3,2-dioxaphosphiran.

Besonders bevorzugte Phosphite/Phosphonite sind:

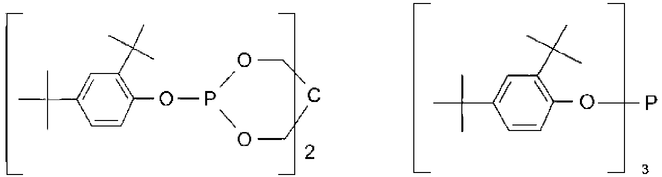

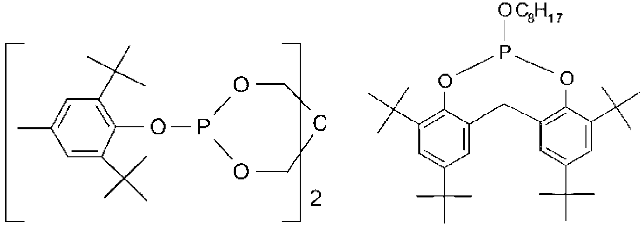

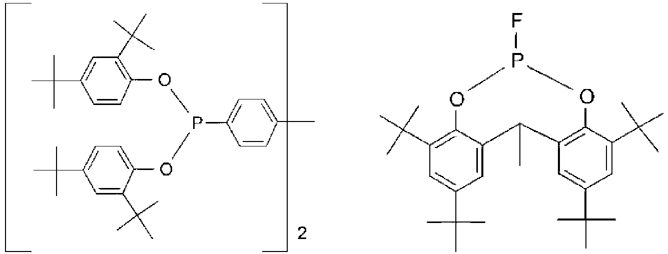

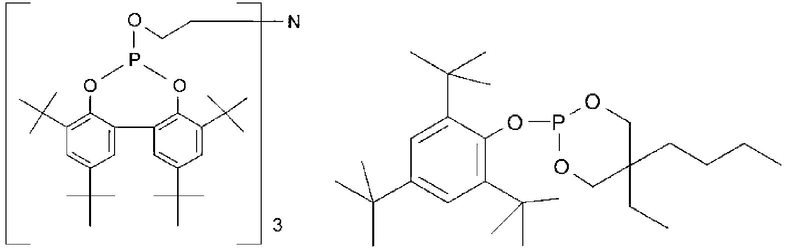

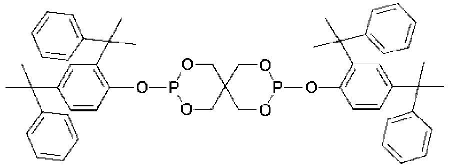

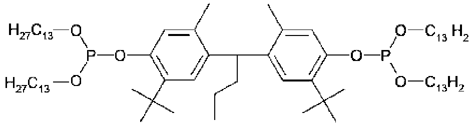

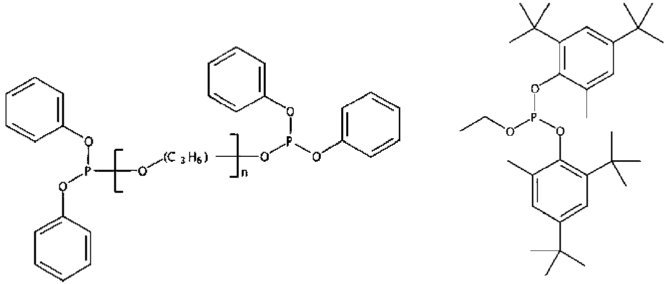

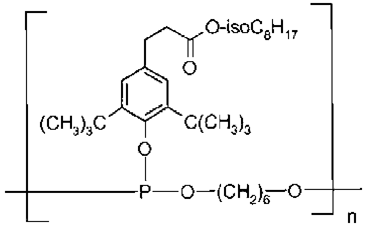

Besonders bevorzugt wird das Phosphit Tris-(2,4-di-*tert*-butylphenyl)phosphit als sekundäres Antioxidans verwendet.

Bevorzugte Schwefelverbindungen sind:
Distearylthiodipropionat, Dilaurylthiodipropionat; Ditridecyldithiopropionat, Ditetradecylthiodipropionat, 3-(dodecylthio)-1,1'-[2,2-bis[[3-(dodecylthio)-1-oxopropoxy]methyl]-1,3-propandiyl]propansäureester.

In einer weiterhin bevorzugten Ausführungsform besteht die Komponente (B) sowohl aus einem primären Antioxidans als auch aus einem sekundären Antioxidans. In diesem Fall ist besonders bevorzugt, dass die Komponente (B) aus einem phenolischen Antioxidans und einem Phosphit oder Phosphonit besteht.

In einer weiteren bevorzugten Ausführungsform bestehen die Komponenten (A) und (B) aus einem nachwachsenden Rohstoff.

Gemäß einer weiteren bevorzugten Variante des erfindungsgemäßen Verfahrens weist das mindestens eine Alditol die Summenformel

HOCH₂[CH(OH)]ₙCH₂OH,

R₁-OCH₂[CH(OH)]ₙCH₂OH,

oder

HOCH₂[CH(OH)]ₙ[CH(OR₁)]CH₂OH

mit n = 2-6, bevorzugt n = 3-5 auf, wobei R₁ ein gegebenenfalls substituierter Zuckerrest ist.

Vorzugsweise ist das mindestens eine Alditol ausgewählt aus der Gruppe bestehend aus Threit, Erythrit, Galactit, Mannit, Ribit, Sorbit, Xylit, Arabit, Isomalt, Lactit, Maltit, Altritol, Iditol, Maltotritol und hydrierte Oligo- und Polysaccharide mit Polyol-Endgruppen und Mischungen hiervon. Besonders bevorzugt ist das mindestens eine bevorzugte Alditol ausgewählt aus der Gruppe bestehend aus Erythrit, Mannit, Isomalt, Maltit und Mischungen hiervon. Ganz besonders bevorzugt ist das mindestens eine Alditol Mannit oder Erythrit. Maltit kann weiterhin als sogenannter Syrup vorliegen, der technisch durch Hydrierung von Glucose erhalten wird und neben Maltit, Sorbit auch hydrierte Oligo- und Polysaccharide mit Alditol-Endgruppen enthält. Die Alditole können dabei in unterschiedlichen optischen Isomeren, z.B. in der D- oder L-Form oder meso-Form vorliegen.

Beispiele für Heptitole und Octitole sind: meso-glycero-allo-Heptitol, D-glycero-D-altro-Heptitol, D-glycero-D-manno-Heptitol , meso-glycero-gulo-Heptitol, D-glycero-D-galacto-Heptitol (Perseitol), D-glycero-D-gluco-Heptitol, L-glycero-D-gluco Heptitol, D-erythro-L-galacto-Octitol, D-threo-L-galacto-Octitol

Die Strukturen und Festpunkte der bevorzugten Alditole sind der folgenden Tabelle 1 zu entnehmen.

**Tabelle 1**

| Bezeichnung | Chemische Struktur | Festpunkt [°C] |
|---|---|---|
| Arabit (Arabitol) | 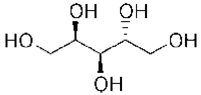 | 103 |
| Erythrit (Erythritol) | 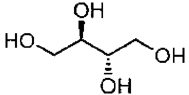 | 120-123 |
| Isomalt (Palatinit) | 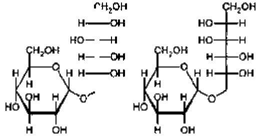 | 145-150 (Gemisch) |
| Galactit (Galactinol) | 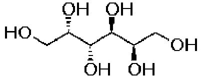 | 185-188 |
| Lactit (Lactitol) | 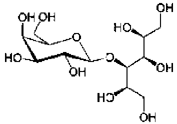 | 146 |
| Maltit (Maltitol) | 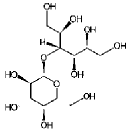 | 149-152 |
| Mannit (Mannitol) | 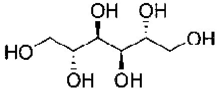 | 166-168 |
| Ribit (Ribitol) | 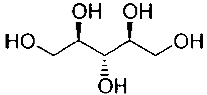 | 102 |
| Sorbit (Sorbitol) | 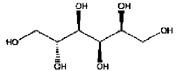 | 94-96 |
| Maltotritol | 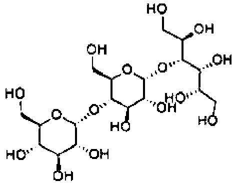 | 184 |
| Hydrierte Oligo- und Polysaccharide | 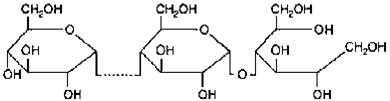 | |

Alternativ oder zusätzlich zu den zuvor genannten Alditolen können beim erfindungsgemäßen Verfahren (bzw. für die Zwecke der erfindungsgemäßen Kunststoffzusammensetzung, der Formmasse bzw. dem Formteil oder der Stabilisator-Zusammensetzung) auch Cyclitole, d. h. ringförmige Polyole, verwendet werden.

Insbesondere kann das mindestens eine Cyclitol ausgewählt sein aus der Gruppe bestehend aus Inositol (myo, scyllo-, D-chiro-, L-chiro-, muco-, neo-, allo-, epi- und cis-Inosit), 1,2,3,4-tetrahydroxycyclohexan, 1,2,3,4,5-pentahydroxycyclohexan, Quercitol, Viscumitol, Bornesitol, Conduritol, Ononitol, Pinitol, Pinpollitol, Quebrachitol, Ciceritol, Chinasäure, Shikimisäure und Valienol, bevorzugt ist dabei myo-Inosit (myo-Inositol).

Für die Zwecke der vorliegenden Erfindung werden die als Komponenten (B) enthaltenen Alditole bzw. Cyclitole hinsichtlich ihres Gewichtsanteils insgesamt als Komponente (B) aufgefasst, so dass hiervon stets die Gesamtheit der enthaltenen Alditole und/oder Cyclitole zu verstehen ist.

Eine besonders bevorzugte Variante des erfindungsgemäßen Verfahrens ist dadurch gekennzeichnet, dass mindestens ein primäres Antioxidans und mindestens ein sekundäres Antioxidans in den halogenfreien thermoplastischen Kunststoff eingebracht werden. Dies bedeutet, dass als Komponente (A) mindestens ein primäres Antioxidans und mindestens ein sekundäres Antioxidans verwendet werden. Auf diese Weise kann eine noch wirksamere Stabilisierung des halogenfreien thermoplastischen Kunststoffs gegen oxidativen, thermischen und/oder actinischen Abbau erreicht werden.

In einer weiteren bevorzugten Variante des erfindungsgemäßen Verfahrens werden die Komponente (A) und die Komponente (B) in einem Gewichtsverhältnis von 5:95 bis 95:5, bevorzugt von 10:90 bis 90:10, besonders bevorzugt von 20:80 bis 80:20, in das halogenfreie thermoplastische Kunststoff-Rezyklat eingebracht.

Besteht die Komponente (A) sowohl aus einem primären Antioxidans als auch aus einem sekundären Antioxidans so ist das Verhältnis zwischen primären und sekundären Antioxidans bevorzugt 90:10 bis 10:90, besonders bevorzugt 80:20 bis 20:80 und ganz besonders bevorzugt 70:30 bis 30:70.

Eine weitere bevorzugte Variante des erfindungsgemäßen Verfahrens zeichnet sich dadurch aus, dass die Komponenten (A) und (B) dadurch in das halogenfreie thermoplastische Kunststoff-Rezyklat eingebracht werden, dass
die als Feststoff vorliegenden Komponenten (A) und (B) mit dem als Feststoff vorliegenden halogenfreien thermoplastischen Kunststoff-Rezyklat vermischt werden und die dabei entstehende Mischung geschmolzen und anschließend abgekühlt wird, oder
die als Feststoff vorliegenden Komponenten (A) und (B) geschmolzen und die dabei entstehende Schmelze in eine Schmelze des halogenfreien thermoplastischen Kunststoff-Rezyklat eingebracht wird.

Vorzugsweise werden die Komponenten (A) und (B), die als Pulver, kompaktiert, Granulat, Lösung oder Schuppen vorliegen können, mit dem zu stabilisierenden Polymer gemischt, die Polymermatrix in die Schmelze überführt und anschließend abgekühlt. Alternativ hierzu ist es ebenso möglich, das Additiv in einem schmelzflüssigen Zustand in eine Polymerschmelze einzubringen.

Für den Fall, dass dem halogenfreien thermoplastischen Kunststoff-Rezyklat weitere Bestandteile zugefügt werden, können diese separat, in Form von Flüssigkeiten, Pulvern, Granulaten oder kompaktierten Produkten oder zusammen mit der erfindungsgemäßen Additivzusammensetzung wie zuvor beschrieben den Polymeren zugesetzt werden.

Vorzugsweise kann in das halogenfreie thermoplastische Kunststoff-Rezyklat zusätzlich mindestens ein Zusatzstoff eingebracht werden, welcher ausgewählt ist aus der Gruppe bestehend aus UV-Absorbern, Lichtstabilisatoren, Metalldesaktivatoren, Füllstoffdesaktivatoren, Antiozonantien, Nukleierungsmitteln, Antinukleierungsmitteln, Schlagzähigkeitsverbesserern, Weichmachern, Gleitmitteln, Rheologiemodifikatoren, Thixotropiemitteln, Kettenverlängerern, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobisierungsmitteln, Haftvermittlern, Dipergiermitteln, Kompatibilisatoren, Sauerstofffängern, Säurefängern, Treibmitteln, Abbau-Additiven, Entschäumungsmitteln, Geruchsfängern, Markierungsmitteln, Antifoggingmitteln, Füllstoffen, Verstärkungsstoffen und Mischungen hiervon.

Weiterhin ist es bevorzugt, dass in das halogenfreie thermoplastische Kunststoff-Rezyklat zusätzlich mindestens einen Zusatzstoff eingebracht wird, welcher ausgewählt ist aus der Gruppe bestehend aus
a) Säurefängern, vorzugsweise Calciumstearat, Magnesiumstearat, Zinkstearat, Aluminiumstearat, Calciumstearat, Calciumlactat, Calciumstearoyl-2-lactat, Hydrotalcite, insbesondere synthetische Hydrotalciten auf Aluminium-, Magnesium- und Zinkbasis, Hydrocalumite, Zeolithe, Erdalkalioxide, insbesondere Calciumoxid und Magnesiumoxid, Erdalkalicarbonate, insbesondere Calciumcarbonat, Magnesiumcarbonat und Dolomit, und Hydroxide, insbesondere Brucit,
b) Lichtstabilisatoren, vorzugsweise Lichtstabilisatoren aus der Gruppe der gehinderten Amine,
c) Dispergiermitteln,
d) Füllstoffdesaktivatoren, und
Mischungen hiervon.

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert-*butyl-2'-hydroxyphenyl)-5-chlorobenzotriazol, 2-(3'-*tert*-Butyl-2'-hydroxy-5'-methylphenyl-5-chlorobenzotriazol, 2-(3'-sec-Butyl-5'-*tert*-butyl-2'-hydroxyphenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxy-carbonylethyl)phenyl)-5-chlorobenzotriazol, 2-(3'-*tert*-Butyl-5'-[2-(2-ethyl-hexyloxy)carbonylethyl]-2'-hydroxyphenyl)-5-chlorobenzotriazol, 2-(3'*-tert-*Butyl-2'-hydroxy-5'-(2-methoxycarbonylethyl)phenyl)-5-chlorobenzotriazol, 2-(3'-*tert*-Butyl-2'-hydroxy-5'-(2-methoxycarbonylethyl)phenyl)benzotriazol, 2-(3'-*tert*-Butyl-2'-hydroxy-5'-(2-octyloxycarbonylethyl)phenyl)benzotriazol, 2-(3'-*tert*-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3*'-tert-*Butyl-2'-hydroxy-5'-(2-isooctyloxycarbonylethyl)phenylbenzotriazol, 2,2'-Methylenbis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂-⁆-₂, wobei R = 3'-*tert*-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)-phenyl]benzotriazol, 2-[2'-hydroxy-3'-(1,1,3,3-tetramethylbutyl)-5'-(α,α-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert*-Butylphenylsalicylat, Phenylsalicylat, Octylphenylsalicylat, Dibenzoylresorcinol, Bis(4-*tert-*butylbenzoyl)resorcinol, Benzoylresorcinol, 2,4-Di-*tert*-butylphenyl-3,5-di-*tert-*butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert-*butoxanilid, 2-Ethoxy-2'-ethyloxanilid, N,N'-Bis(3-dimethylaminopropyl)-oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxydisubstituierten Oxaniliden und Mischungen von o- und p-Ethoxydisubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxypropyloxy)phenyl]-4,6-bis(2,4-dimethyl)-1,3,5-triazin, 2-[4-(Dodecyloxy/Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)-phenyl]-4,6-bis(2,4-dimethylphenyl-1,3,5-triazin, 2-(2-Hydroxy-4-hexyloxy)-phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)-phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]-phenyl}-4,6-bis(2,4-dimethylphenyl-1,3,5-triazin.

Geeignete Metalldeaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldi-hydrazid, N,N'-Bis(salicyloyl)thiopropionyldihydrazid.

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, 1-cyclohexyloxy-2,2,6,6-tetramethyl-4-octadecylaminopiperidin, bis(1-acyl-2,2,6,6-tetramethyl piperidin-4-yl)sebazat 1-(2-hydroxy-2-methylpropoxy)-4-hydroxy-2,2,6,6-tetramethylpiperidin,1-(2-hydroxy-2-methylpropoxy)-4-oxo-2,2,6,6-tetramethylpiperidin, bis(1-octyloxy-2,2,6,6-tetramethylpiperidyl)succinat, N,N'-bis-formyl-N,N'-bis(2,2,6,6-tetramethyl-4-piperidyl)hexamethylendiamin, (33a) bis(1-undecanyloxy-2,2,6,6-tetramethylpiperidin-4-yl)carbonat,1,2,2,6,6-pentamethyl-4-aminopiperidine,2-undecyl-7, 7,9,9-tetramethyl-1-oxa-3,8-diaza-4-oxo-spiro[4,5]decane-tris(2,2,6,6-tetramethyl-4-pi peridyl)nitrilotri-acetat1,1'-(1,2-ethanediyl)-bis(3,3,5,5-tetramethylpiperazinon), 3-n-octyl-7, 7,9,9-tetramethyl-1,3,8-triazaspiro[4.5]decan-2,4-dione, 8-acetyl-3-dodecyl-7,7,9,9-tetramethyl-1,3,8-triazaspiro[4.5]decan-2,4-dion,3-dodecyl-1-(2,2,6,6-tetramethyl-4-piperidyl)pyrrolidin-2,5-dion, 3-dodecyl-1-(1,2,2,6,6-pentamethyl-4-piperidyl)pyrrolidin-2,5-dion, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2,2,6,6-tetramethyl-4-piperidyl)hexamethylendiamin und 4-*tert*-Octylamino-2,6-dichloro-1,3,5-triazin, Tris(2,2,6,6-tetramethyl-4-piperidyl)nitrilotriacetat, Tetrakis(2,2,6,6-tetramethyl-4-piperidyl)-1,2,3,4-butantetracarboxylat, 1,1'-(1,2-Ethandiyl)-bis(3,3,5,5-tetramethylpiperazinon), 4-Benzoyl-2,2,6,6-tetramethylpiperidin, 4-Stearyloxy-2,2,6,6-tetra-methylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Umfasst in den oben angegebenen Strukturen sind dabei jeweils auch die sterisch gehinderten N-H, N-alkyl wie N-methyl oder N-octyl, die N-alkoxy-Derivate wie N-methoxy oder N-octyloxy, die Cycloalkylderivate wie N-cyclohexyloxy und die N-(2-hydroxy-2-methylpropoxy) Analoga.

Bevorzugte gehinderte Amine weisen weiterhin die folgenden Strukturen auf:

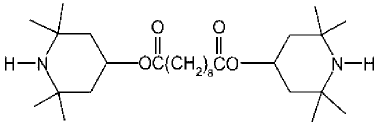

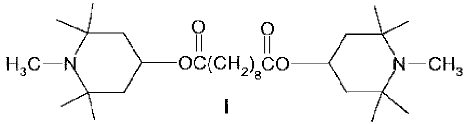

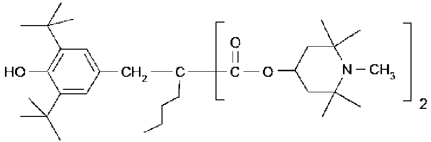

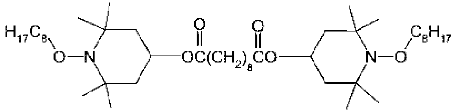

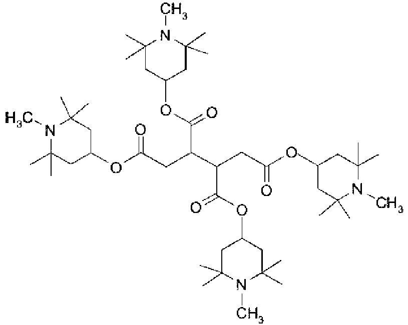

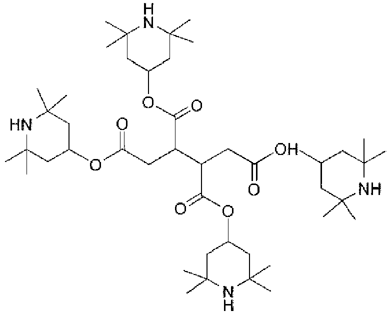

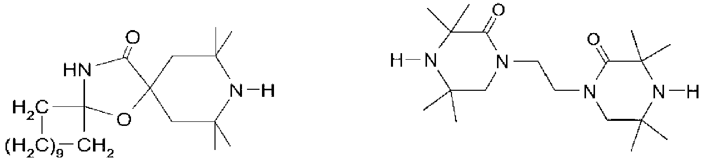

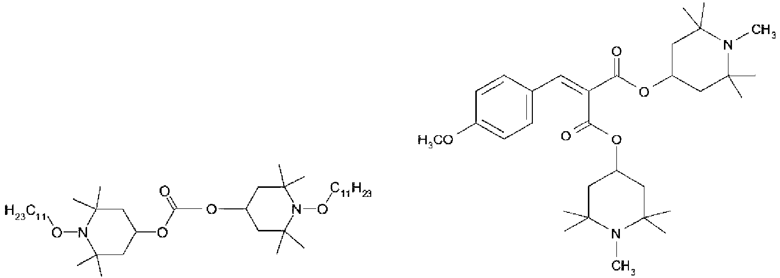

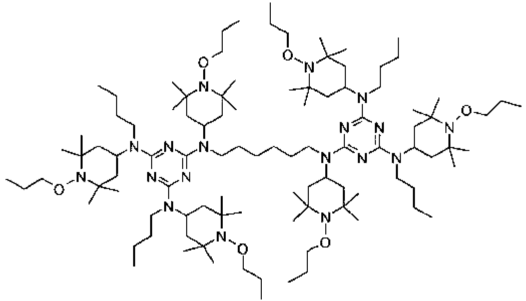

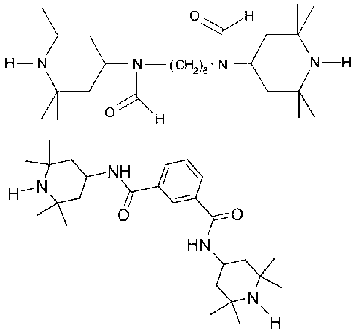

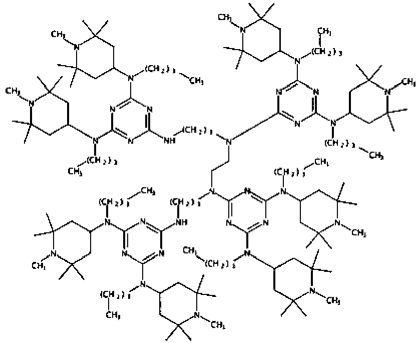

Bevorzugte oligomere und polymere gehinderte Amine weisen die folgenden Strukturen auf:

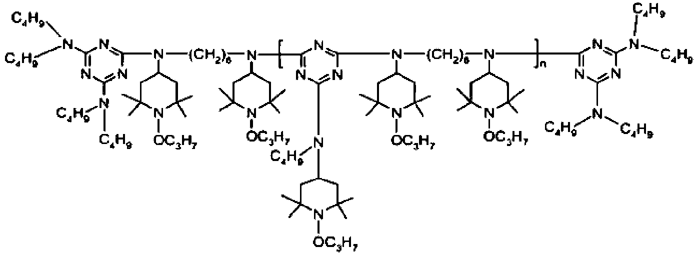

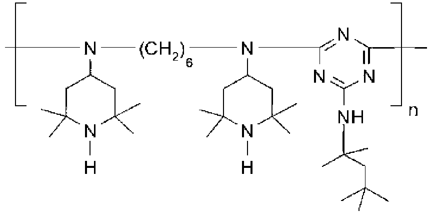

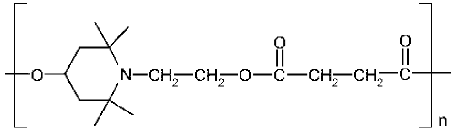

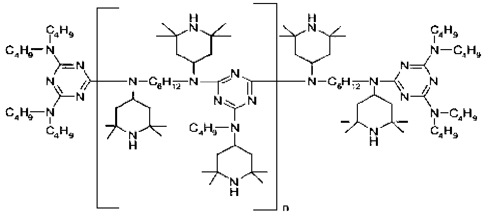

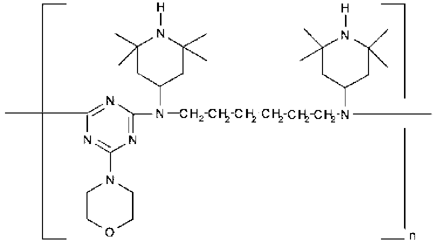

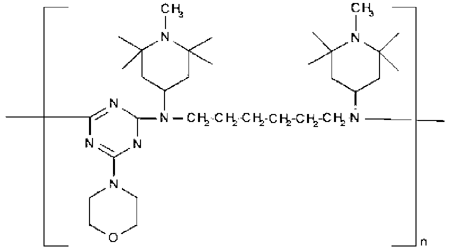

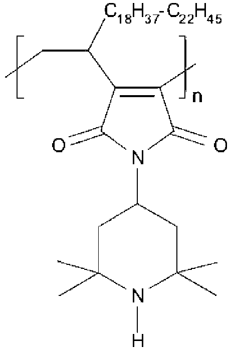

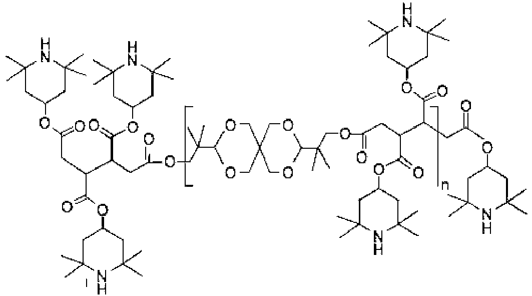

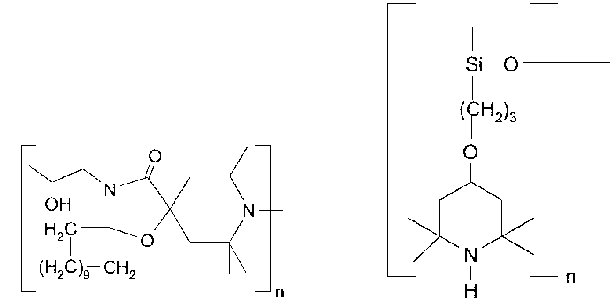

Bei den zuvor genannten Verbindungen bedeutet n jeweils 3 bis 100.

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z.B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z.B. Polyethylen-block-Polyethylenoxid, Dendrimere, z.B. hydroxylgruppenhaltige Dendrimere.

Geeignete Nukleierungsmittel sind beispielsweise Talkum, Alkali oder Erdalkalisalze von mono- und polyfunktionellen Carbonsäuren wie z. B. Benzoesäure, Bernsteinsäure, Adipinsäure, z.B. Natriumbenzoat, Zinkglycerolat, Aluminiumhydroxy-bis(4-tert-butyl)benzoat, Benzylidensorbitole wie z.B. 1,3:2,4-Bis(Benzyliden)sorbitol oder 1,3:2,4-Bis(4-Methylbenzyliden)sorbitol, 2,2'-Methylen-bis-(4,6-di-tert-butylphenyl)phosphat, sowie Trisamide und Diamide wie z.B. Trimesinsäuretricyclohexylami, Trimesinsäuretri(4-methylcyclohexylamid), Trimesinsäure tri(tert.butylamid), N,N',N"-1,3,5-Benzoltriyltris(2,2-dimethyl-propanamid) oder 2,6-Naphthalindicarbosäuredicyclohexylamid.

Geeignete Antinukleierungsmittel sind beispielsweise Azinfarbstoffe wie z.B. Nigrosin, ionische Flüssigkeiten und/oder Lithiumsalze.

Geeignete Flammschutzmittel sind beispielsweise:
a) Anorganische Flammschutzmittel wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) Stickstoffhaltige Flammschutzmittel wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melamin-Metall-Phosphate wie z.B. Melaminaluminiumphosphat, Melaminzinkphosphat, Melaminmagnesiumphosphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid,
c) Radikalbildner, wie z.B. Alkoxyamine, Hydroxylaminester, Azoverbindungen, Sulfenamide, Sulfenimide, Dicumyl oder Polycumyl, Hydroxyimide und deren Derivate wie z.B. Hydroxyimidester oder Hydroxyimidether
d) Phosphorhaltige Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
e) Halogenhaltige Flammschutzmittel auf Chlor- und Brombasis wie z.B. polybrominierte Diphenyloxide, wie z.B. Decabromdiphenyloxid,Tris(3-bromo-2,2-bis(bromomethyl)propyl-phosphat, Tris(tribromneopentyl)phosphat, Tetrabromphthalsäure, 1,2-Bis-(tribromphenoxy)ethan, Hexabromcyclododecan, bromiertes Diphenylethan, Tris-(2,3-dibrompropyl)isocyanurat, Ethylen-bis-(tetrabromophthalimid), Tetrabromo-bisphenol A, bromiertes Polystyrol, bromiertes Polybutadien bzw, Polystyrol-bromiertes Polybutadien-Copolymere, bromierter Polyphenylenether, bromiertes Epoxidharz, Polypentabrombenzylacrylat, ggf. in Kombination mit Sb₂O₃ und/oder Sb₂O₅,
f) Borate wie z.B. Zinkborat oder Calciumborat, ggf. auf Trägermaterial wie z.B. Silica
g) Schwefelhaltige Verbindungen wie z.B. elementarer Schwefel, Disulfide und Polysulfide, Thiuramsulfid, Dithiocarbamate, Mercaptobenzthiazol und Sulfenamide,
h) Antidrip-Mitteln wie z.B. Polytetrafluorethylen,
i) Siliciumhaltige Verbindungen wie z.B. Polyphenylsiloxane,
j) Kohlenstoffmodifikationen wie z.B. Carbon-Nanoröhren (CNT), Blähgraphit oder Graphen
k) sowie Kombinationen oder Mischungen hieraus.

Geeignete Füllstoffe und Verstärkungsstoffe sind beispielsweise synthetische oder natürliche Materialien wie z.B. Calciumcarbonat, Silikate, Glasfasern, Glaskugeln (massiv oder hohl), Talkum, Glimmer, Kaolin, Bariumsulfat, Metalloxide und Metallhydroxide, Ruß, Graphit, Kohlenstoffnanoröhrchen, Graphen, Holzmehl oder Fasern von Naturprodukten wie z.B. Cellulose oder synthetische Fasern. Weitere geeignete Füllstoffe sind Hydrotalcite oder Zeolithe oder Schichtsilikate wie z.B. Montmorillonit, Bentonit, Beidelit, Mica, Hectorit, Saponit, Vermiculit, Ledikit, Magadit, Illit, Kaolinit, Wollastonit, Attapulgit.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrone, Isoindolinone, Azo-Verbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Kettenverlängerer für den linearen Molekulargewichtsaufbau von Polykondensationspolymeren wir Polyestern oder Polyamiden sind beispielsweise Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z.B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Optische Aufheller sind beispielsweise Bisbenzoxazole, Phenylcumarine oder Bis(styryl)biphenyle und insbesondere optische Aufheller der Formeln:

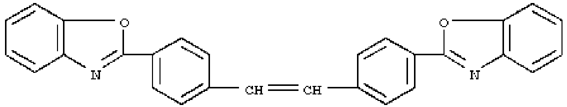

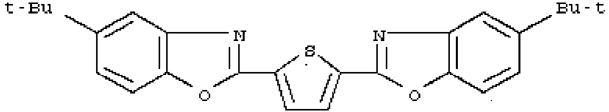

Geeignete Füllstoffdeaktivatoren sind beispielsweise Polysiloxane, Polyacrylate insbesondere Blockcopolymere wie Polymethacrylsäure-polyalkylenoxid oder Polyglycidyl(meth)acrylate und deren Copolymere z.B. mit Styrol sowie Epoxide z.B. der folgenden Strukturen:

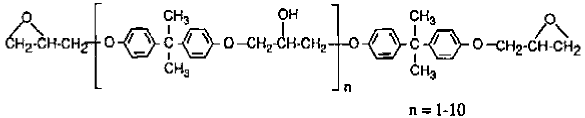

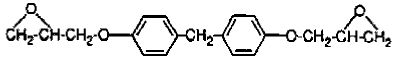

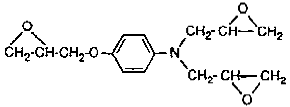

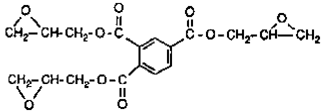

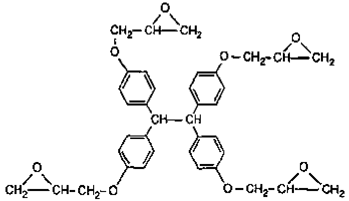

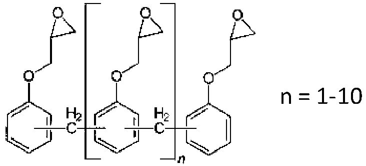

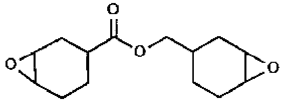

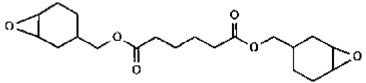

Geeignete Antistatika sind beispielsweise ethoxylierte Alkylamine, Fettsäureester, Alkylsulfonate und Polymere wie z.B. Polyetheramide.

Geeignete Antiozonantien sind die oben genannten Amine wie z.B. N,N'-Diisopropyl-p-phenylendiamin, N,N'-Di-sec-butyl-p-phenylendiamin, N,N'-Bis(1,4-dimethylpentyl)-p-phenylendiamin, N,N'-Dicyclohexyl-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin.

Geeignete Entformungshilfsmittel sind beispielsweise Montanwachse.

Die Einarbeitung der Komponenten (A) und (B) sowie ggf. der zusätzlichen Zusatzstoffe in das Kunststoff-Rezyklat kann durch übliche Verarbeitungsmethoden erfolgen, wobei das Polymere aufgeschmolzen und mit der erfindungsgemäßen Additivzusammensetzung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen wie z.B. unter Stickstoff erfolgen.

Weiterhin können die Komponenten (A) und (B) in Form von sogenannten Masterbatchen oder Konzentraten, die beispielsweise 10-90 % einer Stabilisator-Zusammensetzung bestehend aus den Komponenten (A) und (B) in einem Polymeren enthalten, hergestellt und eingebracht werden.

Weiterhin ist es bevorzugt, dass das halogenfreie thermoplastische Kunststoff-Rezyklat ausgewählt ist aus der Gruppe bestehend aus
a) rezyklierten Polymeren aus Olefinen oder Diolefinen, wie z.B. Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure,
b) rezykliertem Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitril-acrylat (ASA), Styrol-Ethylen, Styrol-Maleinsaureanhydrid-Polymeren einschließlich entsprechenden Pfropfcopolymeren wie z.B. Styrol auf Butadien, Maleinsäureanhydrid auf SBS oder SEBS, sowie Pfropfcopolymeren aus Methylmethacrylat, Styrol-Butadien und ABS (MABS),
c) rezyklierten Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyacrylnitril, Polyacrylamide, und entsprechenden Copolymeren wie z.B. Polyacrylnitril-Polyalkylacrylat,
d) rezyklierten Polymeren aus ungesättigten Alkoholen und Derivaten, wie z.B. Polyvinylalkohol, Polyvinylacetat, Polyvinylbutyral,
e) rezyklierten Polyacetalen, wie z.B. Polyoxymethylen (POM), und entsprechenden Copolymeren, wie z.B. Copolymere mit Butanal,
f) rezyklierten Polyphenylenoxiden und Blends von diesen mit Polystyrol oder Polyamiden,
g) rezyklierten Polymeren von cyclischen Ethern wie z.B. Polyethylenglycol, Polypropylenglycol, Polyethylenoxid, Polypropylenoxid,
h) rezyklierten Polyurethanen aus hydroxyterminierten Polyethern oder Polyestern und aromatischen oder aliphatischen Isocyanaten, insbesondere lineare Polyurethane, Polyharnstoffen,
i) rezyklierten Polyamiden wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol,
j) rezyklierten Polyimiden, Polyamid-imiden, Polyetherimiden, Polyesterimiden, Poly(ether)ketonen, Polysulfonen, Polyethersulfonen, Polyarylsulfonen, Polyphenylensulfid, Polybenzimidazolen, Polyhydantoinen,
k) rezyklierten Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterphthalat, Polyethylennaphthylat, Poly-1,4-dimethylocyclohexanterphthalat, Polyhydroxybenzoat, Polyhydroxynaphthalat, Polymilchsäure,
l) rezyklierten Polycarbonaten, Polyestercarbonaten, sowie Blends von diesen wie z.B. PC/ABS, PC/PBT, PC/PET/PBT,
m) rezyklierten Cellulosederivaten, wie z.B. Cellulosenitrat, Celluloseacetat, Cellulosepropionat, Cellulosebutyrat,
n) sowie Mischungen, Kombinationen oder Blends aus zwei oder mehr der zuvor genannten Polymere.

Besonders bevorzugt ist das halogenfreie thermoplastische Kunststoff-Rezyklat ausgewählt aus der Gruppe bestehend aus Polymeren aus Olefinen oder Diolefinen, wie z.B. Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure.

Ganz besonders bevorzugt ist der halogenfreie thermoplastische Kunststoff ein Polyolefin-Rezyklat. Beispielsweise kann es sich beim halogenfreien thermoplastischen Kunststoff-Rezyklat um Polypropylen, insbesondere also um ein Polypropylen-Rezyklat oder um Polyethylen, insbesondere also ein Polyethylen-Rezyklat, handeln.

Vorzugsweise werden im erfindungsgemäßen Verfahren 0,01 bis 5 Gew. Teile, bevorzugt 0,02 bis 1 Gew. Teil eines Alditols oder Cyclitols in 95-99,99 bevorzugt in 99-99,98 Teile eines halogenfreien thermoplastischen Kunststoff-Rezyklats eingebracht.

Weiterhin werden vorzugsweise im erfindungsgemäßen Verfahren
(A) 0,02 bis 3 Gew.-Teile, bevorzugt 0,03 bis 0,5 Gew.-Teile, mindestens eines Alditols und/oder mindestens eines Cyclitols, und
(B) 0,04 bis 6 Gew.-Teile, bevorzugt 0,06 bis 1 Gew.-Teile, mindestens eines primären Antioxidans und/oder mindestens eines sekundären Antioxidans,
in 91 bis 99,94 Gew.-Teile, bevorzugt 98,5 bis 99,91 Gew.-Teile, mindestens eines halogenfreien thermoplastischen Kunststoff-Rezyklats eingebracht.

Weiterhin ist es bevorzugt, dass
(A) 0,02 bis 3 Gew.-Teile, bevorzugt 0,03 bis 0,5 Gew.-Teile, mindestens eines Alditols und/oder mindestens eines Cyclitols
(B1) 0,02 bis 3 Gew.-Teile, bevorzugt 0,03 bis 0,5 Gew.-Teile, mindestens eines primären Antioxidans,
(B2) 0,02 bis 3 Gew.-Teile, bevorzugt 0,03 bis 0,5 Gew.-Teile, mindestens eines sekundären Antioxidans, und
in 91 bis 99,94 Gew.-Teile, bevorzugt 98,5 bis 99,91 Gew.-Teile, mindestens eines halogenfreien thermoplastischen Kunststoff-Rezyklats eingebracht werden.

Die vorliegende Erfindung betrifft weiterhin ein Kunststoffzusammensetzung, enthaltend oder bestehend aus
mindestens einem Alditol und/oder mindestens einem Cyclitol (Komponente (A)), insbesondere 0,01 bis 5,0 Gew.-Teile, bevorzugt 0,02 bis 1,0 Gew.-Teile des mindestens einen Alditols und/oder Cyclitols (Komponente (A)) und
mindestens einem halogenfreien thermoplastischem Kunststoff-Rezyklat, insbesondere 95,0 bis 99,99 bevorzugt 99,0 bis 99,98 Teile des halogenfreien thermoplastischen Kunststoff-Rezyklats, ausgewählt aus der Gruppe bestehend aus rezyklierten Polymeren aus Olefinen oder Diolefinen.

In diesem Fall sind in der Kunststoffzusammensetzung - mit Ausnahme der ggf. bereits im Recylcat enthaltenden primären und/oder sekundären Antioxidantien keine weiteren primären und/oder sekundären (frischen) Antioxidantien zugesetzt.

Die im Rezyklat enthaltenen primären und/oder sekundären Antioxidantien, sowie deren Abbauprodukte können, wenn erforderlich, durch übliche dem Fachmann bekannte Analysenmethoden z.B. durch chromatographische Methoden wie z.B. HPLC, ggf. nach Extraktion aus dem Polymeren mittels einem geeigneten Lösungsmittel und nachfolgende Aufkonzentration durch Entfernung des Lösungsmittels, bestimmt werden.

Bevorzugt betrifft die vorliegende Erfindung auch eine Kunststoffzusammensetzung, enthaltend oder bestehend aus
(A) mindestens einem Alditol und/oder mindestens einem Cyclitol,
(B) mindestens einem primären Antioxidans und/oder mindestens einem sekundären Antioxidans, und
(C) mindestens einem halogenfreien thermoplastischen Kunststoff-Rezyklat.

In einer bevorzugten Ausführungsform zeichnet sich die Kunststoffzusammensetzung dadurch aus, dass die Kunststoffzusammensetzung
(A) 0,02 bis 3 Gew.-Teile, bevorzugt 0,03 bis 0,5 Gew.-Teile, mindestens eines Alditols,
(B) 0,04 bis 6 Gew.-Teile, bevorzugt 0,06 bis 1 Gew.-Teile, mindestens eines primären Antioxidans und/oder mindestens eines sekundären Antioxidans, und
(C) 91 bis 99,94 Gew.-Teile, bevorzugt 98,5 bis 99,91 Gew.-Teile, mindestens eines halogenfreien thermoplastischen Kunststoffs
enthält oder hieraus besteht.

Vorzugsweise enthält die erfindungsgemäße Zusammensetzung mindestens ein primäres Antioxidans und mindestens ein sekundäres Antioxidans.

Eine weitere bevorzugte Ausführungsform ist dadurch gekennzeichnet, dass die Kunststoffzusammensetzung
(A) 0,02 bis 3 Gew.-Teile, bevorzugt 0,03 bis 0,5 Gew.-Teile, mindestens eines Alditols und/oder mindestens eines Cyclitols,
(B1) 0,02 bis 3 Gew.-Teile, bevorzugt 0,03 bis 0,5 Gew.-Teile, mindestens eines primären Antioxidans,
(B2) 0,02 bis 3 Gew.-Teile, bevorzugt 0,03 bis 0,5 Gew.-Teile, mindestens eines sekundären Antioxidans, und
(C) 91 bis 99,94 Gew.-Teile, bevorzugt 98,5 bis 99,91 Gew.-Teile, mindestens eines halogenfreien thermoplastischen Kunststoff-Rezyklats.
enthält oder hieraus besteht.

Gemäß einer weiteren bevorzugten Ausführungsform enthält die erfindungsgemäße Kunststoffzusammensetzung zusätzlich mindestens einen Zusatzstoff, welcher ausgewählt ist aus der Gruppe bestehend aus UV-Absorbern, Lichtstabilisatoren, Metalldesaktivatoren, Füllstoffdesaktivatoren, Antiozonantien, Nukleierungsmitteln, Antinukleierungsmitteln, Schlagzähigkeitsverbesserern, Weichmachern, Gleitmitteln, Rheologiemodifikatoren, Thixotropiemitteln, Kettenverlängerern, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobisierungsmitteln, Haftvermittlern, Dipergiermitteln, Kompatibilisatoren, Sauerstofffängern, Säurefängern, Treibmitteln, Abbau-Additiven, Entschäumungsmitteln, Geruchsfängern, Markierungsmitteln, Antifoggingmitteln, Füllstoffen, Verstärkungsstoffen und Mischungen hiervon.

Weiterhin ist es bevorzugt, dass die Kunststoffzusammensetzung zusätzlich mindestens einen Zusatzstoff enthält, welcher ausgewählt ist aus der Gruppe bestehend aus
a) Säurefängern, vorzugsweise Calciumstearat, Magnesiumstearat, Zinkstearat, Aluminiumstearat, Calciumstearat, Calciumlactat, Calciumstearoyl-2-lactat, Hydrotalcite, insbesondere synthetische Hydrotalciten auf Aluminium-, Magnesium- und Zinkbasis, Hydrocalumite, Zeolithe, Erdalkalioxide, insbesondere Calciumoxid und Magnesiumoxid, Zinkoxid, Erdalkalicarbonate, insbesondere Calciumcarbonat, Magnesiumcarbonat und Dolomit, und Hydroxide, insbesondere Brucit,
b) Lichtstabilisatoren, vorzugsweise Lichtstabilisatoren aus der Gruppe der gehinderten Amine,
c) Dispergiermitteln,
d) Füllstoffdesaktivatoren, und
Mischungen hiervon.

Wird dem Rezyklat nur ein Alditol oder Cyclitol als Stabilisator hinzugegeben, so ist in einer bevorzugten Ausführungsform insbesondere ein Säurefänger der weitere Zusatzstoff. Bevorzugte Säurefänger sind oben definiert. Vorzugweise ist die erfindungsgemäße Kunststoffzusammensetzung mit einem erfindungsgemäßen Verfahren zur Stabilisierung von halogenfreien thermoplastischen Kunststoffen gegen oxidativen, thermischen und/oder aktinischen Abbau herstellbar oder wurde damit hergestellt.

Sämtliche bereits bezüglich des erfindungsgemäßen Verfahrens beschriebenen bevorzugten Varianten, beispielhaften Ausführungsformen und Kommentare (z.B. bezüglich möglicher zu verwendender Komponenten und Zusatzstoffe) gelten auch entsprechend für die erfindungsgemäße Kunststoffzusammensetzung.

Gemäß einer bevorzugten Ausführungsform der erfindungsgemäßen Kunststoffzusammensetzung ist das mindestens eine primäre Antioxidans ausgewählt aus der Gruppe bestehend aus phenolischen Antioxidantien, Aminen, Lactonen und Mischungen hiervon.

Besonders bevorzugt ist als primäres Antioxidans das phenolische Antioxidans Pentaerythritol-tetrakis[3-(3,5-di-tert-butyl-4-hydroxyphenyl)propionat in der erfindungsgemäßen Kunststoffzusammensetzung enthalten.

Eine weitere bevorzugte Ausführungsform der erfindungsgemäßen Kunststoffzusammensetzung zeichnet sich dadurch aus, dass das mindestens eine sekundäre Antioxidans ausgewählt ist aus der Gruppe bestehend aus Phosphorverbindungen, insbesondre Phosphiten und Phosphoniten, Organo-Schwefelverbindungen, insbesondere Sulfiden und Disulfiden, sowie Mischungen hiervon.

Besonders bevorzugt ist als sekundäres Antioxidans das Phosphit Tris-(2,4-di-tert-butylphenyl)phosphit in der erfindungsgemäßen Kunststoffzusammensetzung enthalten.

Gemäß einer weiteren bevorzugten Ausführungsform weist das mindestens eine Alditol die Summenformel

HOCH₂[CH(OH)]ₙCH₂OH,

R₁-OCH₂[CH(OH)]ₙCH₂OH,

oder

HOCH₂[CH(OH)]ₙ [CH(OR₁)]CH₂OH

mit n = 2-6, bevorzugt n = 3-5 auf, wobei R₁ ein gegebenenfalls substituierter Zuckerrest ist.

Vorzugsweise ist das mindestens eine Alditol ausgewählt aus der Gruppe bestehend aus Threit, Erythrit, Galactit, Mannit, Ribit, Sorbit, Xylit, Arabit, Isomalt, Lactit, Maltit Maltotritol und hydrierte Oligo- und Polysaccharide mit Polyol-Endgruppen und Mischungen hiervon. Besonders bevorzugt ist das mindestens eine bevorzugte Alditol ausgewählt aus der Gruppe bestehend aus Erythrit, Mannit, Isomalt, Maltit und Mischungen hiervon. Ganz besonders bevorzugt ist das mindestens eine Alditol Mannit oder das Cyclitol myo-Inosit.

In einer weiteren bevorzugten Ausführungsform sind die Komponente (A) und die Komponente (B) in einem Gewichtsverhältnis von 95:5 bis 5:95, bevorzugt von 90:10 bis 10:90, besonders bevorzugt von 80:20 bis 20:80 in der Kunststoffzusammensetzung enthalten.

Weiterhin ist es bevorzugt, dass das halogenfreie thermoplastische Kunststoff-Rezyklat ausgewählt ist aus der Gruppe bestehend aus
a) Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure,
b) sowie Mischungen, Kombinationen oder Blends aus zwei oder mehr der zuvor genannten Polymere.

Besonders bevorzugt ist das halogenfreie thermoplastische Kunststoff-Rezyklat ausgewählt aus der Gruppe bestehend aus Polymeren aus Olefinen oder Diolefinen, wie z.B. Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure.

Ganz besonders bevorzugt ist das halogenfreie thermoplastische Kunststoff-Rezyklat ein Polyolefin, insbesondere ein Polyolefin-Rezyklat. Beispielsweise kann es sich beim halogenfreien thermoplastischen Kunststoff um Polypropylen, insbesondere um ein Polypropylen-Rezyklat, handeln.

Die vorliegende Erfindung betrifft auch eine Formmasse oder ein Formteil, die herstellbar aus erfindungsgemäßen Kunststoffzusammensetzung ist, insbesondere in Form von Spritzgussteilen, Folien, Filmen, Lacken, Beschichtungen, Schäumen, Fasern, Kabeln, Rohren, Profilen, Hohlkörpern, Bändchen, Membranen, z.B. Geomembranen, Schmierstoffen, Farbmitteln und/oder Klebstoffen, die über Extrusion, Spritzguss, Blasformen, Kalandrieren, Pressverfahren, Spinnprozesse und/oder Rotomoulding hergestellt werden z.B. für die Elektroindustrie, für die Bauindustrie, für die Transportindustrie, für medizinische Anwendungen, für Haushalts- und Elektrogeräte, für Fahrzeugteile, für Konsumartikel, für Verpackungen, für Möbel, und/oder für Textilien.

Beschrieben wird ebenso eine Stabilisator-Zusammensetzung zur Stabilisierung von halogenfreien thermoplastischen Kunststoff-Rezyklaten, vorzugsweise halogenfreien thermoplastischen Kunststoff-Rezyklaten, gegen oxidativen, thermischen und/oder aktinischen Abbau, bestehend aus
(A) mindestens einem primären Antioxidans und/oder mindestens einem sekundären Antioxidans, und
(B) mindestens einem Alditol und/oder mindestens einem Cyclitol.
Sämtliche bereits bezüglich des erfindungsgemäßen Verfahrens sowie bezüglich der erfindungsgemäßen Kunststoffzusammensetzung beschriebenen bevorzugten Varianten, beispielhaften Ausführungsformen und Kommentare (z.B. bezüglich möglicher zu verwendender Komponenten und Zusatzstoffe) gelten auch entsprechend für die Stabilisator-Zusammensetzung.

In einer bevorzugten Ausführungsform der Stabilisator-Zusammensetzung ist das mindestens eine primäre Antioxidans ausgewählt aus der Gruppe bestehend aus phenolischen Antioxidantien, Aminen, Lactonen und Mischungen hiervon.

Bevorzugte phenolische Antioxidantien, bevorzugte Amine, und bevorzugte Lactone sind jeweils dieselben wie die beim erfindungsgemäßen Verfahren und bei der erfindungsgemäßen Kunststoffzusammensetzung genannten.

Eine weitere bevorzugte Ausführungsform der Stabilisator-Zusammensetzung zeichnet sich dadurch aus, dass das mindestens eine sekundäre Antioxidans ausgewählt ist aus der Gruppe bestehend aus Phosphorverbindungen, insbesondere Phosphiten und Phosphoniten, Organo-Schwefelverbindungen, insbesondere Sulfiden und Disulfiden, sowie Mischungen hiervon.

Bevorzugte Phosphite bzw. Phosphonite und bevorzugte Schwefelverbindungen sind jeweils dieselben wie die beim erfindungsgemäßen Verfahren und bei der erfindungsgemäßen Kunststoffzusammensetzung genannten.

Gemäß einer weiteren bevorzugten Ausführungsform weist das mindestens eine Alditol die Summenformel

HOCH₂[CH(OH)]ₙCH₂OH,

R₁-OCH₂[CH(OH)]ₙCH₂OH,

oder

HOCH₂[CH(OH)]ₙ[CH(OR₁)]CH₂OH

mit n = 2-5 auf, wobei R₁ ein gegebenenfalls substituierter Zuckerrest ist.

Vorzugsweise ist das mindestens eine Alditol ausgewählt aus der Gruppe bestehend aus Threit, Erythrit, Galactit, Mannit, Ribit, Sorbit, Xylit, Arabit, Isomalt, Lactit, Maltit, Maltotritol und hydrierte Oligo- und Polysaccharide mit Polyol-Endgruppen und Mischungen hiervon. Besonders bevorzugt ist das mindestens eine bevorzugte Alditol ausgewählt aus der Gruppe bestehend aus Erythrit, Mannit, Isomalt, Maltit und Mischungen hiervon. Ganz besonders bevorzugt ist das mindestens eine Alditol Mannit oder Erythrit oder das Cyclitol myo-Inosit.

Die vorliegende Erfindung betrifft auch die Verwendung mindestens eines Alditols und/oder mindestens eines Cyclitols zur Stabilisierung von halogenfreien thermoplastischen Kunststoff-Rezyklaten gegen oxidativen, thermischen und/oder aktinischen Abbau.

Ferner betrifft die vorliegende Erfindung die Verwendung der Stabilisator-Zusammensetzung oder einer Stabilisator-Zusammensetzung enthaltend oder bestehend aus
(A) mindestens einem Alditol und/oder mindestens einem Cyclitol und
(B) mindestens einem primären Antioxidans und/oder mindestens einem sekundären Antioxidans,
zur Stabilisierung von halogenfreien thermoplastischen Kunststoff-Rezyklaten, gegen oxidativen, thermischen und/oder aktinischen Abbau, wobei das halogenfreie thermoplastische Kunststoff-Rezyklat ausgewählt ist aus der Gruppe bestehend aus rezyklierten Polymeren aus Olefinen oder Diolefinen.

Bevorzugte halogenfreie thermoplastische Kunststoffe sind dabei dieselben wie die bezüglich des erfindungsgemäßen Verfahrens bzw. die bezüglich der erfindungsgemäßen Kunststoffzusammensetzung genannten.

Sämtliche bereits bezüglich des erfindungsgemäßen Verfahrens sowie bezüglich der erfindungsgemäßen Kunststoffzusammensetzung und bezüglich der Stabilisator-Zusammensetzung beschriebenen bevorzugten Varianten, beispielhaften Ausführungsformen und Kommentare (z.B. bezüglich möglicher zu verwendender Komponenten und Zusatzstoffe) gelten auch entsprechend für die erfindungsgemäße Verwendung einer Stabilisator-Zusammensetzung.

Die vorliegende Erfindung wird anhand der nachfolgenden Ausführungsbeispiele näher erläutert ohne die Erfindung auf die speziell dargestellten Parameter zu beschränken.

Zur Simulation eines Rezyklates in Form eines Produktionsabfalls wurde ein handelsübliches Polypropylen (Moplen HP 500N, Lyondell Basell Industries) zu einem Pulver gemahlen und dreimal bei einer Maximaltemperatur von 230 °C mittels eines Doppelschneckenextruders vom Typ Process 11 (Fisher Scientific) bei 200 U/min verarbeitet, im Wasserbad abgekühlt sowie anschließend granuliert. Durch diesen Prozess erfolgt eine Vorschädigung, die sich in der Zunahme des nach ISO 1133 gemessenen MVR (Melt Volume Rate, gemessen bei 230°C/2,16 kg), der mit einem Abbau des Polymeren korreliert. Dabei wird eine Zunahme des MVR von 18, 1 g/10 min (nach 1. Extrusion) auf 25,0 g/10 min (3. Extrusion) gemessen. Diese Zunahme stellt eine deutliche Vorschädigung dar. Anschließend wurde dieses vorgeschädigte Polypropylen bei der nachfolgenden 4. Extrusion mit den in der Tabelle 2 angegebenen Stabilisatoren verarbeitet und erneut der MVR bestimmt. Im Anschluss wurde das erhaltene Granulat ohne weitere Zusätze erneut verarbeitet (5. Extrusion).

Dabei zeigt sich, dass das nicht nachstabilisierte Polymere weiter einem deutlichen Abbau unterliegt. Der Abbau kann durch Zugabe einer Stabilisatorkombination aus einem handelsüblichen Antioxidans und einem Phosphit (Vergleichsbeispiel 2) oder einem speziellen Rezyklatstabilisator (Vergleichsbeispiel 3) verringert werden. Überraschenderweise führt die Zugabe eines Alditols (Mannit) zu einem phenolischen Antioxidans und einem Phosphit zu einer verbesserten Stabilisierung, d.h. zum niedrigsten MVR-Wert. Auch ein weiterer Extrusionsschritt zeigt die beste Stabilisierungswirkung, d.h. den niedrigsten MVR-Wert durch die erfindungsgemäße Zusammensetzung.

**Tabelle 2: Nachstabilisierung von Polypropylen**

| | Nachstabilisierung | Nach 4. Extrusion MVR (230/2.16) | Nach 5. Extrusion MVR (230/2.16) |
|---|---|---|---|
| Vergleichsbeispiel 1 | Ohne Zusatz | 29,5 | 34,6 |
| Vergleichsbeispiel 2 | 0.05 % AO-1 + 0.05 % P-1 | 23,2 | 25,4 |
| Vergleichsbeispiel 3 | 0.2 % Recyclostab 411 | 23,0 | 24,4 |
| Erfindungsgemäßes Beispiel 1 | 0.05 % AO-1 + 0.05 % P-1 + 0.1 % Mannit | 22,3 | 24,0 |

| | | | |
|---|---|---|---|
| AO-1: Pentaerythritol-tetrakis[3-(3,5-di-tert-butyl-4-hydroxyphenyl)propionat P-1: Tris-(2,4-di-tert-butylphenyl)phosphit | | | |

Recyclostab 411: Bei Recyclostab 411 handelt es sich um ein handelsübliches Stabilisatorsystem, das insbesondere für Polyolefin-Rezyklate empfohlen wird (Hersteller: PolyAd Services GmbH, Bensheim, s. z.B. Compounding World, April 2016, 41-48).

In den folgenden erfindungsgemäßen Beispielen wird die Wirkung verschiedener Alditole/Cyclitole in Kombination mit einem primären und sekundären Antioxidans in unterschiedlichen Konzentrationen und die Wirkung in einem post-consumer Rezyklat gezeigt.

Tabelle 3: Ein Polypropylen-Rezyklat (vorgeschädigt, hergestellt durch Alterung von Moplen HP 500 N (Lieferant: Lyondell-Basell) bei 140 °C im Umluftofen für 32 Tage) wird zusammen mit den in der Tabelle angegebenen Zusätzen bei 200 °C in einem Doppelschnecken-Microextruder (MC 5, Hersteller DSM) im kontinuierlichen Modus bei 90 Umdrehungen pro Minute während 30 Minuten in der Schmelze im Kreis gefördert. Nach 10, 20 und 30 Minuten wird jeweils die Kraftaufnahme gemessen. Die Kraft ist ein Maß für die Zähigkeit der Schmelze und damit für das Molekulargewicht. Je höher die verbliebene Kraft (Nach Aufschmelzzeit von 2 Minuten = 100 %), desto geringer ist der Abbau des Polymeren und desto besser die Stabilisierungswirkung.

**Tabelle 3:**

| | Nachstabilisierung | Verbleibende Kraft in % nach 10 Minuten | Verbleibende Kraft in % nach 20 Minuten | Verbleibende Kraft in % nach 30 Minuten |
|---|---|---|---|---|
| Vergleichsbeispiel 4 | Ohne Zusatz | 77 | 60 | 43 |
| Erfindungsgemäßes Beispiel 2 | 0.1 % Erythrit+ 0.05 % AO-1 + 0.05 % P-1 | 85 | 74 | 62 |
| Erfindungsgemäßes Beispiel 3 | 0.2 % Erythrit + 0.05 % AO-1 + 0.05 % P-1 | 94 | 84 | 72 |
| Erfindungsgemäßes Beispiel 4 | 0.1 % myo-Inosit + 0.05 % AO-1 + 0.05 % P-1 | 88 | 78 | 68 |
| Erfindungsgemäßes Beispiel 5 | 0.1 % Isomalt + 0.05 % AO-1 + 0.05 % P-1 | 82 | 67 | 55 |

Die erfindungsgemäßen Beispiele weisen dabei zu allen Messzeiten höhere Kräfte, d.h. einen geringeren Abbau des Polymeren als das Vergleichsbeispiel auf.

Tabelle 4: Ein post-consumer Polypropylen-Rezyklat aus Batteriekastenmahlgut (Lieferant: BSB Braubach) wird zusammen mit den in der Tabelle angegebenen Zusätzen bei 215 °C in einem Doppelschnecken-Microextruder (MC 5, Hersteller DSM) im kontinuierlichen Modus bei 90 Umdrehungen pro Minute während 30 Minuten in der Schmelze im Kreis gefördert. Nach 10, 20 und 30 Minuten wird jeweils die Kraftaufnahme gemessen. Die Kraft ist ein Maß für die Zähigkeit der Schmelze und damit für das Molekulargewicht. Je höher die verbliebene Kraft (Nach Aufschmelzzeit von 2 Minuten = 100 %), desto geringer ist der Abbau des Polymeren und desto besser die Stabilisierungswirkung.

**Tabelle 4**

| | Nachstabilisierung | Verbleibende Kraft in % nach 10 Minuten | Verbleibende Kraft in % nach 20 Minuten | Verbleibende Kraft in % nach 30 Minuten |
|---|---|---|---|---|
| Vergleichsbeispiel 4 | Ohne Zusatz | 70 | 47 | 27 |
| Vergleichsbeispiel 6 | 0.05 % AO-1 + 0.05 % P-1 + 0.3 % AS-1 | 80 | 62 | 50 |
| Vergleichsbeispiel 7 | 0.1 % AO-1 + 0.1 % P-1 + 0.3 % AS-1 | 86 | 71 | 58 |
| Vergleichsbeispiel 8 | 0.3 % AS-1 | 78 | 55 | 35 |
| Erfindungsgemäßes Beispiel 6 | 0.1 % Erythrit+ 0.05 % AO-1 + 0.05 % P-1 + 0.3 % AS-1 | 96 | 73 | 65 |
| Erfindungsgemäßes Beispiel 7 | 0.2 % Erythrit + 0.05 % AO-1 + 0.05 % P-1 + 0.3 % AS-1 | 96 | 88 | 67 |
| Erfindungsgemäßes Beispiel 8 | 0.1 % myo-Inosit + 0.05 % AO-1 + 0.05 % P-1 + 0.3 % AS-1 | 90 | 78 | 69 |
| Erfindungsgemäßes Beispiel 9 | 0.1 % Isomalt + 0.05 % AO-1 + 0.05 % P-1 + 0.3 % AS-1 | 94 | 79 | 69 |

| | | | | |
|---|---|---|---|---|
| AS-1 = Hycite 713 (Hersteller: Clariant SE) ist ein Hydrotalcit, das als Säurefänger eingesetzt wird. | | | | |

Die erfindungsgemäßen Beispiele weisen dabei zu allen Messzeiten höhere Kräfte, d.h. einen geringeren Abbau des Polymeren als das Vergleichsbeispiel auf.

In dem folgenden erfindungsgemäßen Beispiel (Tabelle 5) wird analog zu den Verarbeitungsbedingungen von Tabelle 3 die Stabilisierung eines Rezyklats durch ein Alditol allein gezeigt.

**Tabelle 5**

| | Nachstabilisierung | Verbleibende Kraft in % nach 10 Minuten | Verbleibende Kraft in % nach 20 Minuten | Verbleibende Kraft in % nach 30 Minuten |
|---|---|---|---|---|
| Vergleichsbeispiel 4 (aus Tabelle 3) | Ohne Zusatz | 77 | 60 | 43 |
| Erfindungsgemäßes Beispiel 11 | 0.2 % Erythrit | 83 | 61 | 46 |

Das erfindungsgemäße Beispiele weist dabei zu allen Messzeiten höhere Kräfte, d.h. einen geringeren Abbau des Polymeren als das Vergleichsbeispiel auf.

In den folgenden erfindungsgemäßen Beispielen (Tabelle 6) wird analog zu den Verarbeitungsbedingungen von Tabelle 4 die Stabilisierung eines Rezyklats durch ein Alditol ohne Antioxidans gezeigt.

**Tabelle 6**

| | Nachstabilisierung | Verbleibende Kraft in % nach 10 Minuten | Verbleibende Kraft in % nach 20 Minuten | Verbleibende Kraft in % nach 30 Minuten |
|---|---|---|---|---|
| Vergleichsbeispiel 5 (aus Tabelle 4) | Ohne Zusatz | 70 | 47 | 27 |
| Erfindungsgemäßes Beispiel 12 | 0.1 % myo-Inosit + 0.3 % AS-1 | 82 | 69 | 57 |

Das erfindungsgemäße Beispiel weist dabei zu allen Messzeiten höhere Kräfte, d.h. einen geringeren Abbau des Polymeren als das Vergleichsbeispiel auf.

Das Post-consumer Batteriekasten-Rezyklat wurde sodann bei einer Maximaltemperatur von 230 °C mittels eines Doppelschneckenextruders vom Typ Process 11 (Fisher Scientific) bei 200 U/min dreimal extrudiert, im Wasserbad abgekühlt, sowie anschließend granuliert und jeweils der MVR nach 1., 2. und 3. Extrusion bestimmt (Tabelle 7). Je niedriger der MVR desto geringer ist der Abbau des Polymeren bei der Verarbeitung und desto besser ist die Stabilisierungswirkung.

**Tabelle 7:**

| | Nachstabilisierung | Nach 1. Extrusion MVR (230/2.16) | Nach 2. Extrusion MVR (230/2.16) | Nach 3. Extrusion MVR (230/2.16) |
|---|---|---|---|---|
| Vergleichsbeispiel 6 | Ohne Zusatz | 9.6 | 10.2 | 11.4 |
| Erfindungsgemäßes Beispiel 13 | 0.2 % Mannit + 0.2 % AS-1 | 9.2 | 9.3 | 9.2 |
| Erfindungsgemäßes Beispiel 14 | 0.1 % Mannit + 0.1 % Tannin + 0.2 % AS-1 | 8.4 | 8.8 | 8.5 |
| Erfindungsgemäßes Beispiel 15 | 0.2 % Mannit + 0.2 % Tannin + 0.2 % AS-1 | 8.2 | 8.4 | 8.5 |

Die erfindungsgemäßen Beispiele weisen dabei nach allen Extrusionen einen geringeren MVR-Wert auf, d.h. einen geringeren Abbau und damit eine verbesserte Stabilität auf als das Vergleichsbeispiel.

In einer weiteren Versuchsreihe wurde ein Polypropylen-Rezyklat (vorgeschädigt, hergestellt durch Alterung von Moplen HP 500 N (Lieferant: Lyondell-Basell) bei 140 °C im Umluftofen für 32 Tage)
mit den in der Tabelle angegebenen Zusätzen bei 200 °C in einem Doppel-schnecken-Microextruder (MC 5, Hersteller DSM) im kontinuierlichen Modus bei 90 Umdrehungen pro Minute während 30 Minuten in der Schmelze im Kreis gefördert und die prozentuale Reststabilität anhand der verbliebenen Kraft bestimmt (Tabelle 8). Die Kraft ist ein Maß für die Zähigkeit der Schmelze und damit für das Molekulargewicht. Je höher die verbliebene Restkraft am Ende des Experiments, desto geringer ist der Abbau des Polymeren und desto besser die Stabilisierungswirkung.

**Tabelle 8**

| | Nachstabilisierung | Verbleibende Kraft in N nach 30 Minuten |
|---|---|---|
| Vergleichsbeispiel 7 | 0.05 % AO-1 + 0.05 % P-1 | 310 |
| Vergleichsbeispiel 8 | 0.1 % AO-1 + 0.1 % P-1 | 390 |
| Vergleichsbeispiel 9 | 0.1 % P-1 | 350 |
| Erfindungsgemäßes Beispiel 16 | 0.05 % AO-1 + 0.05 % P-1 + 0.05 % Mannit | 520 |
| Erfindungsgemäßes Beispiel 17 | 0.05 % AO-1 + 0.05 % P-1 + 0.1 % Mannit | 680 |
| Erfindungsgemäßes Beispiel 18 | 0.05 % AO-1 + 0.05 % P-1 + 0.2 % Mannit | 640 |
| Erfindungsgemäßes Beispiel 19 | 0.1 % AO-1 + 0.1 % Mannit | 580 |
| Erfindungsgemäßes Beispiel 20 | 0.1 % P-1 + 0.1 % Mannit | 560 |
| Erfindungsgemäßes Beispiel 21 | 0.1 % Mannit | 410 |
| Erfindungsgemäßes Beispiel 22 | 0.5 % Mannit | 470 |

Die erfindungsgemäßen Beispiele weisen dabei eine höhere Restkraft auf, d.h. einen geringeren Abbau des Polymeren als die Vergleichsbeispiele.

In analoger Weise zu Polypropylen-Rezyklat wurden post-consumer Polyethylen-Rezyklate aus Verpackungsfolien, bestehend vorwiegend aus LDPE und LLDPE, Polyethylenrezyklate aus Hohlkörpern, bestehend vorwiegend aus HDPE, Polystyrol-Rezyklate aus Verpackungsschäumen, Polyamid-6 Rezyklate aus Elektroanwendungen und PET-Rezyklate aus Getränkeflaschen jeweils mit den erfindungsgemäßen Zusätzen versehen und extrudiert. In allen Fällen lässt sich eine verbesserte Stabilität im Vergleich zu den Rezyklaten ohne Zusatz feststellen.

## Patentansprüche

1. Verfahren zur Stabilisierung von halogenfreien thermoplastischen Kunststoff-Rezyklaten gegen oxidativen, thermischen und/oder aktinischen Abbau, bei welchem mindestens ein Alditol und/oder mindestens ein Cyclitol (Komponente (A)) in ein halogenfreies thermoplastisches Kunststoff-Rezyklat eingebracht werden, wobei das halogenfreie thermoplastische Kunststoff-Rezyklat ausgewählt ist aus der Gruppe bestehend aus rezyklierten Polymeren aus Olefinen oder Diolefinen.

2. Verfahren nach Anspruch 1, **dadurch gekennzeichnet, dass** zusätzlich zum mindestens einen Alditol und/oder mindestens einen Cyclitol mindestens ein primäres Antioxidans und/oder mindestens ein sekundäres Antioxidans (Komponente (B)) in ein halogenfreies thermoplastisches Kunststoff-Rezyklat eingebracht werden, wobei bevorzugt das mindestens eine primäre Antioxidans ausgewählt ist aus der Gruppe bestehend aus phenolischen Antioxidantien, Aminen, Lactonen und Mischungen hiervon und/oder das mindestens eine sekundäre Antioxidans ausgewählt ist aus der Gruppe bestehend aus Phosphorverbindungen, insbesondere Phosphiten und Phosphoniten, Organo-Schwefelverbindungen, insbesondere Sulfiden und Disulfiden, sowie Mischungen hiervon.

3. Verfahren gemäß einem der vorhergehenden Ansprüche, **dadurch gekennzeichnet, dass** das mindestens eine Alditol die Summenformel
HOCH₂[CH(OH)]ₙ CH₂OH,
R₁-OCH₂[CH(OH)]ₙ CH₂OH,
oder
HOCH₂[CH(OH)]ₙ[CH(OR₁)]CH₂OH
mit n = 2-6, bevorzugt n = 3-5 aufweist, wobei R₁ ein gegebenenfalls substituierter Zuckerrest ist, wobei das Alditol bevorzugt ausgewählt ist aus der Gruppe bestehend aus Threit, Erythrit, Galactit, Mannit, Ribit, Sorbit, Xylit, Arabit, Isomalt, Lactit, Maltit, Maltotritol und hydrierte Oligo- und Polysaccharide mit Polyol-Endgruppen und Mischungen hiervon, wobei das mindestens eine Alditol vorzugsweise ausgewählt ist aus der Gruppe bestehend aus Erythrit, Mannit, Isomalt, Maltit und Mischungen hiervon und/oder
das mindestens eine Cyclitol ausgewählt ist aus der Gruppe bestehend aus Inositol, Quercitol, Viscumitol, Bornesitol, Conduritol, Ononitol, Pinitol, Pinpollitol, Ciceritol, Quebrachitol, Chinasäure, Shikimisäure und Valienol wobei das mindestens eine Cyclitol vorzugsweise myo-Inosit ist.

4. Verfahren gemäß einem der Ansprüche 2 bis 3, **dadurch gekennzeichnet, dass** mindestens ein primäres Antioxidans und mindestens ein sekundäres Antioxidans in das halogenfreie thermoplastische Kunststoff-Rezyklat eingebracht werden.

5. Verfahren gemäß einem der Ansprüche 2 bis 4, **dadurch gekennzeichnet, dass** die Komponente (A) und die Komponente (B) in einem Gewichtsverhältnis von 95:5bis 5:95, bevorzugt von 90:10 bis 10:90, besonders bevorzugt von 80:20 bis 20:80, in das halogenfreie thermoplastische Kunststoff-Rezyklat eingebracht werden.

6. Verfahren gemäß einem der Ansprüche 2 bis 5, **dadurch gekennzeichnet, dass** die Komponenten (A) und (B) dadurch in das halogenfreie thermoplastische Kunststoff-Rezyklat eingebracht werden, dass
die als Feststoff vorliegenden Komponenten (A) und (B) mit dem als Feststoff vorliegenden halogenfreien thermoplastischen Kunststoff-Rezyklat vermischt werden und die dabei entstehende Mischung geschmolzen und anschließend abgekühlt wird, oder
die als Feststoff vorliegenden Komponenten (A) und (B) geschmolzen und die dabei entstehende Schmelze in eine Schmelze des halogenfreien thermoplastischen Kunststoff-Rezyklats eingebracht wird.

7. Verfahren gemäß einem der vorhergehenden Ansprüche, **dadurch gekennzeichnet, dass** bezogen auf 95,0 bis 99,99 Gew.-Teile bevorzugt 99,0 bis 99,98 Gew.-Teile des halogenfreien thermoplastischen Kunststoff-Rezyklats 0,01 bis 5,0 Gew.-Teile, bevorzugt 0,02 bis 1,0 Gew.-Teile des mindestens einen Alditols und/oder Cyclitols (Komponente (A)), oder, dass bezogen auf 91 bis 99,4 Gew.-Teile, bevorzugt 98,5 bis 99,1 Gew.-Teile des halogenfreien thermoplastischen Kunststoff-Recyclats
(A) 0,02 bis 3 Gew.-Teile, bevorzugt 0,03 bis 0,5 Gew.-Teile des mindestens eines Alditols und/oder mindestens eines Cyclitols, und
(B) 0,04 bis 6 Gew.-Teile, bevorzugt 0,06 bis 1 Gew.-Teile des mindestens einen primären Antioxidans und/oder des mindestens einen sekundären Antioxidans
eingebracht werden.

8. Verfahren gemäß einem der vorhergehenden Ansprüche, **dadurch gekennzeichnet, dass** die rezyklierten Polymere aus Olefinen oder Diolefinen ausgewählt sind aus der Gruppe bestehend aus
a) Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure,
b) sowie Mischungen, Kombinationen oder Blends aus zwei oder mehr der zuvor genannten Polymere,
vorzugsweise ein Polyolefin-Rezyklat ist.

9. Kunststoffzusammensetzung, enthaltend oder bestehend aus
mindestens einem Alditol und/oder mindestens einem Cyclitol (Komponente (A)), insbesondere 0,01 bis 5,0 Gew.-Teile, bevorzugt 0,02 bis 1,0 Gew.-Teile des mindestens einen Alditols und/oder Cyclitols (Komponente (A)) und
mindestens einem halogenfreien thermoplastischem Kunststoff-Rezyklat, insbesondere 95,0 bis 99,99 bevorzugt 99,0 bis 99,98 Teile des halogenfreien thermoplastischen Kunststoff-Rezyklats, ausgewählt aus der Gruppe bestehend aus rezyklierten Polymeren aus Olefinen oder Diolefinen.

10. Kunststoffzusammensetzung, gemäß vorhergehenden Anspruch, enthaltend oder bestehend aus
(A) mindestens einem Alditol und/oder mindestens einem Cyclitol (Komponente (A)),
(B) mindestens einem primären Antioxidans und/oder mindestens einem sekundären Antioxidans (Komponente (B)), und
(C) mindestens einem halogenfreiem thermoplastischem Kunststoff-Rezyklat
wobei die Kunststoffzusammensetzung bevorzugt
(A) 0,02 bis 3 Gew.-Teile, bevorzugt 0,03 bis 0,5 Gew.-Teile, mindestens eines Alditols und/oder mindestens eines Cyclitols,
(B) 0,04 bis 6 Gew.-Teile, bevorzugt 0,06 bis 1 Gew.-Teile, mindestens eines primären Antioxidans und/oder mindestens eines sekundären Antioxidans, insbesondere
(B1) 0,02 bis 3 Gew.-Teile, bevorzugt 0,03 bis 0,5 Gew.-Teile, mindestens eines primären Antioxidans,
(B2) 0,02 bis 3 Gew.-Teile, bevorzugt 0,03 bis 0,5 Gew.-Teile, mindestens eines sekundären Antioxidans, und
(C) 91 bis 99,94 Gew.-Teile, bevorzugt 98,5 bis 99,91 Gew.-Teile, mindestens eines halogenfreien thermoplastischen Kunststoff-Rezyklats
enthält oder hieraus besteht.

11. Kunststoffzusammensetzung gemäß einem der Ansprüche 9 bis10, **dadurch gekennzeichnet, dass** die Kunststoffzusammensetzung zusätzlich mindestens einen Zusatzstoff enthält, welcher ausgewählt ist aus der Gruppe bestehend aus UV-Absorbern, Lichtstabilisatoren, Metalldesaktivatoren, Füllstoffdesaktivatoren, Antiozonantien, Nukleierungsmitteln, Antinukleierungsmitteln, Schlagzähigkeitsverbesserern, Weichmachern, Gleitmitteln, Rheologiemodifikatoren, Thixotropiemitteln, Kettenverlängerern, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobisierungsmitteln, Haftvermittlern, Dipergiermitteln, Kompatibilisatoren, Sauerstofffängern, Säurefängern, Treibmitteln, Abbau-Additiven, Entschäumungsmitteln, Geruchsfängern, Markierungsmitteln, Antifoggingmitteln, Füllstoffen, Verstärkungsstoffen und Mischungen hiervon, insbesondere zusätzlich mindestens einen Zusatzstoff enthält, welcher ausgewählt ist aus der Gruppe bestehend aus
a) Säurefängern, vorzugsweise Calciumstearat, Magnesiumstearat, Zinkstearat, Aluminiumstearat, Calciumstearat, Calciumlactat, Calciumstearoyl-2-lactat, Hydrotalcite, insbesondere synthetische Hydrotalciten auf Aluminium-, Magnesium- und Zinkbasis, Hydrocalumite, Zeolithe, Erdalkalioxide, insbesondere Calciumoxid und Magnesiumoxid, Erdalkalicarbonate, insbesondere Calciumcarbonat, Magnesiumcarbonat und Dolomit, und Hydroxide, insbesondere Brucit,
b) Lichtstabilisatoren, vorzugsweise Lichtstabilisatoren aus der Gruppe der gehinderten Amine,
c) Dispergiermitteln,
d) Füllstoffdesaktivatoren, und
e) Mischungen hiervon.

12. Formteil herstellbar aus einer Kunststoffzusammensetzung nach einem der Ansprüche 9 bis 11, in Form von Spritzgussteilen, Folien, Filmen, Lacken, Beschichtungen, Schäumen, Fasern, Kabeln, Rohren, Profilen, Hohlkörpern, Bändchen, Membranen, z.B. Geomembranen, Schmierstoffen, Farbmitteln und/oder Klebstoffen, die über Extrusion, Spritzguss, Blasformen, Kalandrieren, Pressverfahren, Spinnprozesse und/oder Rotomoulding hergestellt werden z.B. für die Elektroindustrie, für die Bauindustrie, für die Transportindustrie, für medizinische Anwendungen, für Haushalts- und Elektrogeräte, für Fahrzeugteile, für Konsumartikel, für Verpackungen, für Möbel, und/oder für Textilien.

13. Verwendung mindestens eines Alditols und/oder mindestens eines Cyclitols zur Stabilisierung von halogenfreien thermoplastischen Kunststoff-Rezyklaten gegen oxidativen, thermischen und/oder aktinischen Abbau, wobei das halogenfreie thermoplastische Kunststoff-Rezyklat ausgewählt ist aus der Gruppe bestehend aus rezyklierten Polymeren aus Olefinen oder Diolefinen.

14. Verwendung einer Stabilisator-Zusammensetzung enthaltend oder bestehend aus
(A) mindestens einem Alditol und/oder mindestens einem Cyclitol und
(B) mindestens einem primären Antioxidans und/oder mindestens einem sekundären Antioxidans
zur Stabilisierung von halogenfreien thermoplastischen Kunststoff-Rezyklaten gegen oxidativen, thermischen und/oder aktinischen Abbau, wobei das halogenfreie thermoplastische Kunststoff-Rezyklat ausgewählt ist aus der Gruppe bestehend aus rezyklierten Polymeren aus Olefinen oder Diolefinen.

## Claims

1. A method for stabilizing halogen-free thermoplastic recyclates against oxidative, thermal, and/or actinic degradation in which method at least one alditol and/or at least one cyclitol (component (A)) is introduced into a halogen-free thermoplastic recyclate, wherein the halogen-free thermoplastic recyclate is selected from the group consisting of recycled polymers of olefins or diolefins.

2. A method in accordance with claim 1, **characterized in that**, in addition to the at least one alditol and/or at least one cyclitol, at least one primary antioxidant and/or at least one secondary antioxidant (component (B)) is/are introduced into a halogen-free thermoplastic recyclate, wherein preferably that the at least one primary antioxidant is selected from the group comprising phenolic antioxidants, amines, lactones, and mixtures thereof and/or the at least one secondary antioxidant is selected from the group comprising phosphorus compounds, in particular phosphites and phosphonites, organo-sulfur compounds, in particular sulfides and disulfides, and mixtures thereof.

3. A method in accordance with one of the preceding claims, **characterized in that** the at least one alditol has the molecular formula
HOCH₂[CH(OH)]ₙ CH₂OH,
R₁-OCH₂[CH(OH)]ₙ CH₂OH,
or
HOCH₂[CH(OH)]ₙ[CH(OR₁)]CH₂OH
where n = 2-6, preferably n = 3-5, where R₁ is an optionally substituted sugar residue, wherein the alditol is selected from the group comprising threitol, erythritol, galactol, mannitol, ribitol, sorbitol, xylitol, arabitol, isomaltol, lactitol, maltitol, maltotritol, and hydrated oligosaccharides and polysaccharides with polyol end groups and mixtures thereof, with the at least one alditol preferably being selected from the group comprising erythritol, mannitol, isomaltol, maltitol, and mixtures thereof and/ or.
the at least one cyclitol is selected from the group comprising inositol, quercitol, viscumitol, bornesitol, conduritol, ononitol, pinitol, pinpolilitol, ciceritol, quebrachitol, quinic acid, shikimic acid, and valienol, with the at least one cyclitol preferably being myo-inositol.

4. A method in accordance with one of the claims 2 to 3, **characterized in that** at least one primary antioxidant and at least one secondary antioxidant are introduced into the halogen-free thermoplastic recyclate.

5. A method in accordance with one of the claims 2 to 8, **characterized in that** component (A) and component (B) are introduced into the halogen-free thermoplastic recyclate in a weight ratio of 95:5 to 5:95, preferably of 90:10 to 90:10, particularly preferably of 80:20 to 20:80.

6. A method in accordance with one of the claims 2 to 5, **characterized in that** components (A) and (B) are introduced into the halogen-free thermoplastic recyclate such that
components (A) and (B) present as solids are mixed with the halogen-free thermoplastic recyclate present as a solid and the mixture thereby produced is melted and subsequently cooled; or
components (A) and (B) present as solids are melted and the melt thus produced is introduced into a melt of the halogen-free thermoplastic recyclate.

7. A method in accordance with one of the preceding claims, **characterized in that** 0.01 to 5.0 parts by weight, preferably 0.02 to 1.0 parts by weight, of the at least one alditol and/or cyclitol (component A)) are introduced with respect to 95.0 to 99.99 parts by weight, preferably 99.0 to 99.98 parts by weight, of the halogen-free thermoplastic recyclate, or that, with respect to 91 to 99.94 parts by weight, preferably 98.5 to 99.91 parts by weight, of the halogen-free thermoplastic recyclate,
(A) 0.02 to 3 parts by weight, preferably 0.03 to 0.5 parts by weight, of at least one alditol and/or of at least one cyclitol; and
(B) 0.04 to 6 parts by weight, preferably 0.06 to 1 parts by weight, of at least one primary antioxidant and/or of the at least one secondary antioxidant
are introduced.

8. A method in accordance with one of the preceding claims, **characterized in that** the recycled polymers of olefins or diolefins are selected from the group comprising
a) polyethylene, in particular LDPE, LLDPE, VLDPE, ULDPE, MDE, HDPE, and UHMWPE, metallocene PE (m-PE), polypropylene, polyisobutylene, poly-4-methyl-pentene-1, polybutadiene, polyisoprene, polycyclooctene, polyalkylene-carbon monoxide copolymers, and corresponding copolymers in the form of statistical or block structures such as polypropylene-polyethylene (EP), EPM or EPDM, ethylene-vinyl acetate (EVA), ethylene-acrylic ester such as ethylene butyl acrylate, ethylene-acrylic acid glycidyl acrylate, and corresponding graft polymers such as polypropylene-g-maleic acid anhydride, polypropylene-g-acrylic acid, and polyethylene-g-acrylic acid,
b) and mixtures, combinations, or blends of two or more of the above-named polymers.

9. A plastic composition comprising or consisting of
(A) at least one alditol and/or at least one cyclitol (component (A)), especially 0.01 to 5.0 parts by weight, preferably 0.02 to 1.0 parts by weight, of the at least one alditol and/or cyclitol; and
(B) at least one halogen-free thermoplastic recyclate, especially 95.0 to 99.99, preferably 99.0 to 99.98 parts by weight, of the at least one halogen-free thermoplastic recyclate, selected from the group consisting of recycled polymers of olefins or diolefins.

10. A plastic composition in accordance with one of the two preceding claims, comprising or consisting of
(A) at least one alditol and/or at least one cyclitol (component (A));
(B) at least one primary antioxidant and/or at least one secondary antioxidant (Component (B)); and
(C) at least one halogen-free thermoplastic recyclate,
wherein the plastic composition preferably comprises or consists of
(A) 0.02 to 3 parts by weight, preferably 0.03 to 0.5 parts by weight, of at least one alditol and/or of at least one cyclitol,
(B) 0.04 to 6 parts by weight, preferably 0.06 to 1 parts by weight, of at least one primary antioxidant and/or of at least one secondary antioxidant, especially
(B1) 0.02 to 3 parts by weight, preferably 0.03 to 0.5 parts by weight, of at least one primary antioxidant,
(B2) 0.02 to 3 parts by weight, preferably 0.03 to 0.5 parts by weight, of at least one secondary antioxidant, and
(C) 91 to 99.94 parts by weight, preferably 98.5 to 99.91 parts by weight, of at least one halogen-free thermoplastic recyclate.

11. A plastic composition in accordance with one of the claims 14 to 18, **characterized in that** the plastic composition additionally comprises at least one additive that is selected from the group comprising UV absorbers, light stabilizers, metal deactivators, filler deactivators, antiozonants, nucleation agents, anti-nucleation agents, toughening agents, plasticizers, mold lubricants, rheological modifiers, thixotropic agents, chain extenders, optical brighteners, antimicrobial active agents, antistatic agents, slip agents, anti-blocking agents, coupling agents, crosslinking agents, anti-cross-linking agents, hydrophilization agents, hydrophobing agents, anchoring agents, dispersing agents, compatibilizers, oxygen captors, acid captors, expanding agents, degradation additives, defoaming agents, odor captors, marking agents, anti-fogging agents, fillers, reinforcement materials, and mixtures thereof, especially at least one additive that is selected from the group comprising
a) acid captors, preferably calcium stearate, magnesium stearate, zinc stearate, aluminum stearate, calcium stearate, calcium lactate, calcium stearoyl-2-lactate, hydrotalcite, in particular synthetic hydrotalcites on a basis of aluminum, magnesium, and zinc, hydrocalumites, zeolites, alkaline earth oxides, in particular calcium oxide and magnesium oxide, alkaline earth carbonates, in particular calcium carbonate, magnesium carbonate, and dolomite, and hydroxides, in particular brucite,
b) light stabilizers, preferably light stabilizers from the group of hindered amines,
c) dispersing agents,
d) filler deactivators, and
e) mixtures thereof.

12. A molding compound or a molded part that can be manufactured from a plastic composition in accordance with one of the claims 9 to 11, in particular in the form of injection molded parts, foils, films, lacquers, coatings, foams, fibers, cables, tubes, sections, hollow bodies, ribbons, membranes, e.g. geo-membranes, lubricants, colorants, and/or adhesives that are manufactured by extrusion, injection molding, blow molding, calendering, pressing processes, spinning processes, and/or rotomolding, e.g. for the electrical industry, for the construction industry, for the transport industry, for medical applications, for domestic and electric appliances, for vehicle parts, for consumer products, for packaging, for furniture, and/or for textiles.

13. Use of at least one alditol and/or at least one cyclitol for stabilizing halogen-free thermoplastic recyclates against oxidative, thermal, and/or actinic degradation, wherein the halogen-free thermoplastic recyclate is selected from the group consisting of recycled polymers of olefins or diolefins.

14. Use of a stabilizer composition comprising or consisting of
(A) at least one alditol and/or at least one cyclitol;
(B) at least one primary antioxidant and/or at least one secondary antioxidant
for stabilizing halogen-free thermoplastic recyclates against oxidative, thermal and/or actinic degradation, wherein the halogen-free thermoplastic recyclate is selected from the group consisting of recycled polymers of olefins or diolefins.

## Revendications

1. Procédé de stabilisation de recyclats thermoplastiques sans halogènes par rapport à la décomposition oxydative, thermique et/ou actinique, lors duquel au moins un alditol et/ou au moins un cyclitol (composant (A)) est/sont incorporé(s) dans un recyclat thermoplastique sans halogènes, dans lequel le recyclat thermoplastique sans halogènes est choisi parmi le groupe constitué des polymères recyclés à base d'oléfines ou de dioléfines.

2. Procédé selon la revendication 1, **caractérisé en ce qu'**au moins un antioxydant primaire et/ou au moins un antioxydant secondaire (composant (B)) est/sont incorporés dans un recyclat thermoplastique sans halogènes en plus du au moins un alditol et/ou au moins un cyclitol, dans lequel le au moins un antioxydant primaire est choisi de manière préférée parmi le groupe constitué des antioxydants phénoliques, des amines, des lactones et de leurs mélanges et/ou au moins un antioxydant secondaire est choisi parmi le groupe constitué des composés phosphorés, en particulier des phosphites et des phosphonites, des composés organosulfurés, en particulier des sulfures et des disulfures, et de leurs mélanges.

3. Procédé selon l'une quelconque des revendications précédentes, **caractérisé en ce que** le au moins un alditol présente la formule moléculaire
HOCH₂[CH(OH)]ₙ CH₂OH,
R₁-OCH₂[CH(OH)]ₙCH₂OH,
ou
HOCH₂[CH(OH)]ₙ[CH(OR₁)]CH₂OH
avec n = 2 à 6, de manière préférée n = 3 à 5, dans lequel R1 est un résidu de sucre éventuellement substitué, dans lequel l'alditol est de manière préférée choisi parmi le groupe constitué du thréitol, de l'érythritol, du galactitol, du mannitol, du ribitol, du sorbitol, du xylitol, de l'arabitol, de l'isomaltol, du lactitol, du maltitol, du maltotritol et des oligosaccharides et polysaccharides hydrogénés à terminaisons polyol, ainsi que leurs mélanges, dans lequel le au moins un alditol est de manière préférée choisi parmi l'érythritol, le mannitol, l'isomaltol, le maltitol et leurs mélanges, et/ou
le au moins un cyclitol est choisi parmi le groupe constitué de l'inositol, du quercitol, du viscumitol, du bornésitol, du conduritol, de l'ononitol, du pinitol, du pinpollitol, du cicéritol, du quebrachitol, de l'acide quinique, de l'acide shikimique et du valienol, dans lequel le au moins un cyclitol est de manière préférée du myo-inositol.

4. Procédé selon l'une quelconque des revendications 2 à 3, **caractérisé en ce qu'**au moins un antioxydant primaire et au moins un antioxydant secondaire sont incorporés dans le recyclat thermoplastique sans halogènes.

5. Procédé selon l'une quelconque des revendications 2 à 4, **caractérisé en ce que** le composant (A) et le composant (B) sont incorporés dans le recyclat thermoplastique sans halogènes dans un rapport pondéral compris entre 95:5 et 5:95, de manière préférée compris entre 90:10 et 10:90, et de manière plus particulièrement préférée compris entre 80:20 et 20:80.

6. Procédé selon l'une quelconque des revendications 2 à 5, **caractérisé en ce que** les composants (A) et (B) sont incorporés dans le recyclat thermoplastique sans halogènes
en mélangeant les composants (A) et (B), présents sous une forme solide, avec le recyclat thermoplastique sans halogènes, présent sous une forme solide, et le mélange obtenu est fondu puis refroidi, ou
les composants (A) et (B) présents sous une forme solide sont fondus et la masse fondue résultante est incorporée dans une masse fondue du recyclat thermoplastique sans halogènes.

7. Procédé selon l'une quelconque des revendications précédentes, **caractérisé en ce que**, pour 95,0 à 99,99 parties en poids, de manière préférée pour 99,0 à 99,98 parties en poids de recyclat thermoplastique sans halogènes, 0,01 à 5,0 parties en poids, de manière préférée 0,02 à 1,0 partie en poids du au moins un alditol et/ou cyclitol (composant (A)) est incorporée, ou, pour 91 à 99,4 parties en poids, de manière préférée pour 98,5 à 99,1 parties en poids du recyclat thermoplastique sans halogènes
(A) 0,02 à 3 parties en poids, de manière préférée 0,03 à 0,5 partie en poids du au moins un alditol et/ou du au moins un cyclitol, est/sont incorporée(s) et
(B) 0,04 à 6 parties en poids, de manière préférée 0,06 à 1 partie en poids, du au moins un antioxydant primaire et/ou du au moins un antioxydant secondaire est/sont incorporée(s).

8. Procédé selon l'une quelconque des revendications précédentes, **caractérisé en ce que** les polymères recyclés à base d'oléfines ou de dioléfines sont choisis parmi le groupe constitué par
a) le polyéthylène, en particulier le PEBD, le PEBDL, le PEVDL, le PEULD, le PEMD, le PEHD et le PEUHMW, le polyéthylène métallocène (m-PE), le polypropylène, le polyisobutylène, le poly-4-méthylpentène-1, le polybutadiène, le polyisoprène, le polycyclooctène, les copolymères de polyalkylène-monoxyde de carbone et les copolymères correspondants sous forme de structures statistiques ou séquencées telles que le polypropylène-polyéthylène (EP), l'EPM ou l'EPDM, l'éthylène-acétate de vinyle (EVA), les acrylates d'éthylène tels que l'éthylène-acrylate de butyle, l'éthylène-acide acrylique-acrylate de glycidyle et les polymères greffés correspondants tels que le polypropylène-g-anhydride maléique, le polypropylène-g-acide acrylique et le polyéthylène-g-acide acrylique,
b) ainsi que les mélanges, combinaisons ou assemblages de deux ou plus de deux des polymères ci-dessus,
de manière préférée un produit recyclé à base de polyoléfine.

9. Composition de matière plastique, contenant ou consistant en
au moins un alditol et/ou au moins un cyclitol (composant (A)), en particulier 0,01 à 5,0 parties en poids, de manière préférée 0,02 à 1,0 partie en poids, du au moins un alditol et/ou cyclitol (composant (A)) et
au moins un matériau thermoplastique recyclé sans halogènes, en particulier 95,0 à 99,99, de manière préférée 99,0 à 99,98, parties du recyclat thermoplastique sans halogènes, choisi parmi le groupe constitué des polymères recyclés à base d'oléfines ou de dioléfines.

10. Composition en matière plastique selon la revendication précédente, contenant ou constituée de
(A) au moins un alditol et/ou au moins un cyclitol (composant (A)),
(B) au moins un antioxydant primaire et/ou au moins un antioxydant secondaire (composant (B)), et
(C) au moins un recyclat thermoplastique sans halogènes
dans laquelle la composition de matière plastique contient de préférence
(A) entre 0,02 et 3 parties en poids, de manière préférée entre 0,03 et 0,5 partie en poids, d'au moins un alditol et/ou dd'au moins un cyclitol,
(B) entre 0,04 et 6 parties en poids, de manière préférée entre 0,06 et 1 partie en poids, d'au moins un antioxydant primaire et/ou d'au moins un antioxydant secondaire, en particulier de
(B1) entre 0,02 et 3 parties en poids, de manière préférée entre 0,03 et 0,5 partie en poids, d'au moins un antioxydant primaire,
(B2) entre 0,02 et 3 parties en poids, de manière préférée entre 0,03 et 0,5 partie en poids, d'au moins un antioxydant secondaire, et
(C) entre 91 et 99,94 parties en poids, de manière préférée entre 98,5 et 99,91 parties en poids, d'au moins un recyclat thermoplastique sans halogènes,
ou en est constituée.

11. Composition en matière plastique selon l'une quelconque des revendications 9 à 10, **caractérisée en ce que** la composition en matière plastique contient en outre au moins un additif choisi parmi le groupe constitué des absorbeurs d'UV, des stabilisateurs de lumière, des désactivateurs de métaux, des désactivateurs de charge, des antiozonants, des agents de nucléation, des agents antinucléants, des améliorateurs de résistance aux impacts, des plastifiants, des lubrifiants, des modificateurs de rhéologie, des agents thixotropes, des allongeurs de chaîne, des azurants optiques, des agents antimicrobiens, des agents antistatiques, des agents de glissement, des agents anti-adhérents, des agents de couplage, des agents de réticulation, des agents anti-réticulation, des agents hydrophilisants, des agents hydrophobes, des promoteurs d'adhérence, des diurétiques, des compatibilisants, des absorbeurs d'oxygène, des absorbeurs d'acide, des agents gonflants, des additifs de décomposition, des agents antimousse, des neutralisateurs d'odeurs, des agents de marquage, des agents antibuée, des charges, des agents de renforcement et leurs mélanges, en particulier contient en outre au moins un additif choisi parmi le groupe constitué
a) des absorbeurs d'acide, de manière préférée le stéarate de calcium, le stéarate de magnésium, le stéarate de zinc, le stéarate d'aluminium, le lactate de calcium, le stéaroyl-2-lactate de calcium, des hydrotalcites, en particulier les hydrotalcites synthétiques à base d'aluminium, de magnésium et de zinc, des hydrocalumites, des zéolites, des oxydes alcalino-terreux, en particulier l'oxyde de calcium et l'oxyde de magnésium, des carbonates alcalino-terreux, en particulier le carbonate de calcium, le carbonate de magnésium et la dolomite, et des hydroxydes, en particulier la brucite,
b) des stabilisateurs de lumière, de manière préférée des stabilisateurs de lumière appartenant au groupe des amines encombrées,
c) des agents dispersants,
d) des désactivateurs de charge, et
e) mélanges de ceux-ci.

12. Pièce moulée pouvant être produite à partir d'une composition en matière plastique selon l'une quelconque des revendications 9 à 11, sous forme de pièces moulées par injection, de feuilles, de films, de laques, de revêtements, de mousses, de fibres, de câbles, de tubes, de profilés, de corps creux, de rubans, de membranes, par exemple des géomembranes, de lubrifiants, de colorants et/ou d'adhésifs, qui sont produits par extrusion, moulage par injection, moulage par soufflage, calandrage, moulage par compression, procédés de filage et/ou rotomoulage, par exemple pour l'industrie électrique, pour l'industrie de la construction, pour l'industrie des transports, pour les applications médicales, pour les appareils électroménagers et électriques, pour les pièces de véhicules, pour les biens de consommation, pour l'emballage, pour les meubles et/ou pour les textiles.

13. Utilisation d'au moins un alditol et/ou d'au moins un cyclitol pour stabiliser les recyclats thermoplastiques sans halogènes par rapport à la décomposition oxydative, thermique et/ou actinique, dans laquelle le recyclat thermoplastique sans halogènes est choisi parmi le groupe constitué des polymères recyclés à base d'oléfines ou de dioléfines.

14. Utilisation d'une composition stabilisatrice, contenant ou constituée de
(A) au moins un alditol et/ou au moins un cyclitol et
(B) au moins un antioxydant primaire et/ou au moins un antioxydant secondaire,
pour la stabilisation de recyclats thermoplastiques sans halogènes par rapport à la décomposition oxydative, thermique et/ou actinique, dans laquelle le recyclat thermoplastique sans halogènes est choisi parmi le groupe constitué des polymères recyclés à base d'oléfines ou de dioléfines.
